# EUROPEAN PATENT APPLICATION

(11) **EP 4 383 935 A1**
(43) Date of publication of application: **12.06.2024**
(21) Application number: 22855234.5
(22) Date of filing: 26.07.2022
(51) Int. Cl.: H04W 80/10, H04W 76/10, H04W 76/25

(54) **COMMUNICATION METHOD AND DEVICE**

(30) Priority: 08.08.2021 CN 202110905125; 18.10.2021 CN 202111212352
(71) Applicant: Huawei Technologies Co., Ltd., Shenzhen, Guangdong 518129 (CN)
(72) Inventor: LI, Yongcui, Shenzhen, Guangdong 518129 (CN); NI, Hui, Shenzhen, Guangdong 518129 (CN)
(74) Representative: MERH-IP Matias Erny Reichl Hoffmann Patentanwälte PartG mbB
(86) International application number: PCT/CN2022/107996
(87) International publication number: WO 2023/016251

(57) **Abstract**

This application provides a communication method and apparatus, to resolve a problem that when a user no longer accesses a MEC platform, an offloading point inserted into a user plane path increases a hop count of the path for accessing a data network, and consequently a path latency is increased, resulting in deterioration of user experience. The method includes: A first session management function network element determines whether a first data network access identifier DNAI is in a service area of the first session management function network element. The first session management function network element sends first information to a first access and mobility management function network element when the first DNAI is in the service area of the first session management function network element, where the first information is used by the first access and mobility management function network element to remove an intermediate session management function network element, and the intermediate session management function network element is a session management function network element that is inserted by the first access and mobility management function network element and that serves a current session.

## Description

This application claims priority to Chinese Patent Application No. 202110905125.9, filed with the China National Intellectual Property Administration on August 8, 2021 and entitled "COMMUNICATION METHOD AND APPARATUS", and to Chinese Patent Application No. 202111212352.X, filed with the China National Intellectual Property Administration on October 18, 2021 and entitled "COMMUNICATION METHOD AND APPARATUS", which are incorporated herein by reference in their entireties.

### TECHNICAL FIELD

This application relates to the communication field, and more specifically, to a communication method and apparatus.

### BACKGROUND

The rapid development of mobile communication promotes the emergence of various new services. In addition to conventional mobile broadband and a conventional internet of things, the mobile communication has motivated the creation of many new application fields such as augmented reality (augmented reality, AR)/virtual reality (virtual reality, VR), an internet of vehicles, industrial control, and an internet of things. In addition, the mobile communication proposes higher requirements on performance such as a network bandwidth and a network latency. This further increases network load. To effectively achieve a high bandwidth and a low latency required by the rapid development of a mobile internet and the internet of things and reduce network load, the European Telecommunication Standard Institute (European Telecommunication Standard Institute, ETSI) proposed a mobile edge computing (mobile edge computing, MEC) technology in 2014.

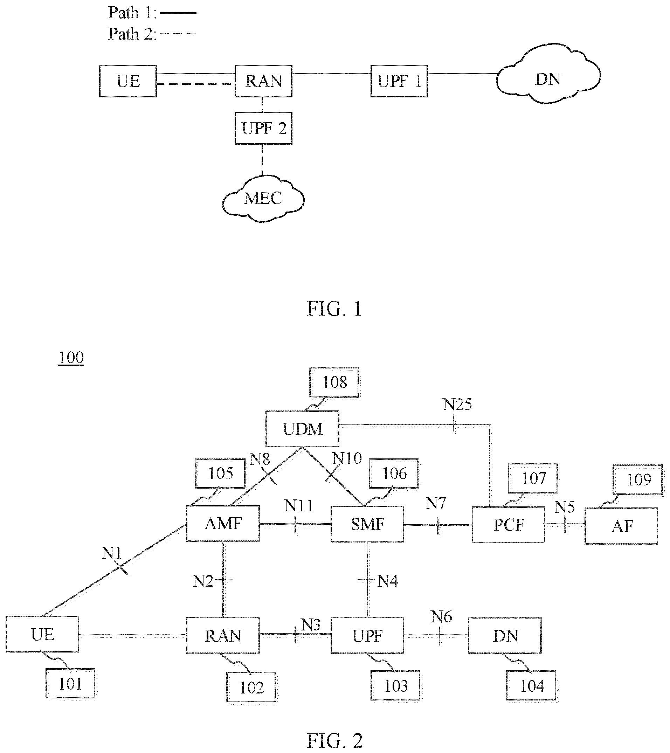

A MEC scenario is evolved based on a 5th generation (5th generation, 5G) mobile communication network architecture. As shown in FIG. 1, compared with that a terminal device (user equipment, UE) accesses a data network (data network, DN) through a radio access network (radio access network, RAN) and a user plane function (user plane function, UPF) (UPF 1) (that is, the UE accesses the data network through a path 1), based on the MEC technology, data to be accessed by the UE may be deployed at a local UPF 2 (that is, a MEC platform in a control area of the UPF 2), and the UE may access the MEC platform through the RAN and the UPF 2. Compared with a path (the path 1) for the UE to access the DN, a path (path 2) for the UE to access the MEC platform is greatly shortened. Therefore, the MEC technology can provide low-latency and high-bandwidth services for users.

Based on the 5G architecture, an enhancing topology of session management function (session management function, SMF) and UPF in 5G networks (enhancing topology of SMF and UPF in 5G networks, ETSUN) scenario is proposed in the 3rd Generation Partnership Project (3rd Generation Partnership Project, 3GPP) R16 phase. In this scenario, an SMF cannot serve an entire public land mobile network (public land mobile network, PLMN), and an SMF service area (SMF service area, SMF SA) is a sum of service areas of all UPFs controlled by the SMF. With reference to the MEC technology, when a network side expects to access a MEC platform 1, the network side may insert a UPF for accessing the MEC platform 1. The UPF is controlled by an inserted intermediate SMF (I-SMF). In other words, when the network side expects to access the MEC platform 1, the network side inserts the I-SMF into a control plane, inserts an offloading point and a local anchor into a user plane, and finally accesses the MEC platform 1 through the local anchor.

However, when a user no longer accesses a MEC platform, an offloading point inserted into a user plane path increases a hop count of the path for accessing a DN, and consequently a path latency is increased, resulting in deterioration of user experience.

### SUMMARY

This application provides a communication method and apparatus, to resolve a problem that when a user no longer accesses a MEC platform, an offloading point inserted into a user plane path increases a hop count of the path for accessing a data network, and consequently a path latency is increased, resulting in deterioration of user experience. Control plane and user plane paths can be restored to initial states, to improve user experience.

According to a first aspect, a communication method is provided. The method includes: A first session management function network element determines whether a first data network access identifier DNAI is in a service area of the first session management function network element. The first session management function network element sends first information to a first access and mobility management function network element when the first DNAI is in the service area of the first session management function network element, where the first information is used by the first access and mobility management function network element to remove an intermediate session management function network element, and the intermediate session management function network element is a session management function network element that is inserted by the first access and mobility management function network element and that serves a current session.

For example, the first session management function network element may directly send the first information to the first access and mobility management function network element.

For example, when the intermediate session management function network element exists in the current session, the intermediate session management function network element may alternatively be used to send the first information to the first access and mobility management function network element.

It should be noted that the first information indicates to remove the intermediate session management function network element. The intermediate session management function network element is a session management function network element that is inserted by the access and mobility management function network element into the current session after the session management function network element establishes the current session and when the session management function network element cannot serve the target DNAI, so that the intermediate session management function network element can serve the target DNAI. Therefore, the intermediate session management function network element is a general term for the first session management function network element. That is, although the first information indicates to remove the intermediate session management function network element, the first information does not indicate a specific intermediate session management function network element. In other words, the first session management function network element knows whether the intermediate session management function network element is inserted into the current session, and may indicate the access and mobility management function network element to remove the intermediate session management function network element inserted into the current session, without knowing a specific intermediate session management function network element.

In the foregoing manner, when the first session management function network element determines that the first session management function network element can serve the first DNAI, regardless of whether the intermediate session management function network element is inserted into the current session, or if the intermediate session management function network element is inserted into the current session, regardless of whether the intermediate session management function network element can serve the first DNAI, the current session no longer needs the intermediate session management function network element. In this case, an intermediate user plane function network element managed by the intermediate session management function network element is a redundant node on a user plane path, and increases a hop count for accessing a data network by a user. In the foregoing manner, when the first session management function network element determines that the first session management function network element can serve the first DNAI, the first session management function network element indicates the first mobility session management function network element to remove the intermediate session management function network element to remove the intermediate user plane function network element. This can avoid a problem that the path latency for accessing the data network by the user is increased because there is the redundant node on the user plane path and the hop count of the path is increased, to improve user experience. In addition, a state before the intermediate session management function network element is inserted by a network side and an intermediate user plane path is inserted into the user plane path can be further restored.

In a possible implementation, the method further includes: The first session management function network element sends the first information when the first session management function network element determines that the first DNAI is in the service area of the first session management function network element, and the first access and mobility management function network element has selected an intermediate session management function network element.

It may be understood that, that the first access and mobility management function network element has selected an intermediate session management function network element may also be described as that the intermediate session management function network element exists in the current session.

In the foregoing manner, the intermediate session management function network element can be further indicated to be removed only when the intermediate session management function network element has been inserted into the current session and the first session management function network element can serve the first DNAI.

In a possible implementation, the method further includes: When the first session management function network element determines that the first DNAI is beyond the service area of the first session management function network element, the first access and mobility management function network element has selected an intermediate session management function network element, and the first DNAI is in a service area of the intermediate session management function network element, the first session management function network element sends the first DNAI to the intermediate session management function network element, to enable the intermediate session management function network element to determine an intermediate user plane function network element based on the first DNAI.

In a current solution, when the first session management function network element determines that the first DNAI is beyond the service area of the first session management function network element, the first access and mobility management function network element has selected the intermediate session management function network element, and the first DNAI is in the service area of the intermediate session management function network element, the first session management function network element sends target DNAI information (target DNAI info, including the first DNAI and an SMF selection type) to the first access and mobility management function network element, and then the first access and mobility management function network element sends the first DNAI to the intermediate session management function network element. However, in the foregoing manner of this application, the first session management function network element directly sends the first DNAI to the intermediate session management function network element, to enable the intermediate session management function network element to determine the intermediate user plane function network element based on the first DNAI, to shorten an information transmission path and improve user experience. In addition, the first access and mobility management function network element does not select a new intermediate session management function network element based on the first DNAI, and does not reuse an original intermediate session management function network element that can serve the first DNAI.

In a possible implementation, when the first session management function network element determines that the first DNAI is beyond the service area of the first session management function network element and is beyond the service area of the intermediate session management function network element, the first session management function network element sends the first information to the first access and mobility management function network element through the intermediate session management function network element. The first information indicates the first access and mobility management function network element to select the intermediate session management function network element.

In the foregoing manner, the first information is sent to the first access and mobility management function network element only when the first DNAI is beyond the service area of the first session management network element and the service area of the intermediate session management function network element, to indicate to select the intermediate session management function to serve the first DNAI. This avoids unnecessary signaling exchange between the first session management function network element and the first access and mobility management function network element.

In a possible implementation, when the first session management function network element determines that the first DNAI is in the service area of the first session management function network element, the first session management function network element determines a first user plane function network element based on the first DNAI; and the first session management function network element sends the first DNAI to the first user plane function network element.

Optionally, when the first session management function network element determines that the first DNAI is in the service area of the first session management function network element, and the first session management function network element determines that the first access and mobility management function network element has selected an intermediate session management function network element and that the first DNAI is beyond a service area of the intermediate session management function network element, the first session management function network element determines a first user plane function network element based on the first DNAI; and the first session management function network element sends the first DNAI to the first user plane function network element.

Optionally, when the first session management function network element determines that the first DNAI is in the service area of the first session management function network element, and the first session management function network element determines that the first access and mobility management function network element does not select an intermediate session management function network element, the first session management function network element determines a first user plane function network element based on the first DNAI; and the first session management function network element sends the first DNAI to the first user plane function network element.

It may be understood that, that the first access and mobility management function network element does not select an intermediate session management function network element may also be described as that no intermediate session management function network element exists in the current session.

In the foregoing manner, when determining that the first access and mobility management function network element does not select the intermediate session management function network element, the first session management function network element directly determines the first user plane function network element (a PSA) based on the first DNAI, and directly performs service offloading processing.

In a possible implementation, the first information includes the first DNAI and first indication information, and the first indication information indicates to remove the intermediate session management function network element.

For example, the first information may be target DNAI information (target DNAI info). The target DNAI information includes two parts: a target DNAI (target DNAI) and an SMF selection type (a current session or a next session). The first DNAI is used as the target DNAI. The first indication information is used as an option in the SMF selection type, and the first indication information may be represented by an enumerated value. For example, '0' indicates the current session, '1' indicates the next session, and '2' indicates intermediate session management function network element removal (I-SMF removal).

In a possible implementation, the first information is included in a first message, and the first message does not include the first DNAI.

For example, the first information may be included in target DNAI information (target DNAI info). The target DNAI information does not include a target DNAI, and includes only an SMF selection type.

For example, the first information may be included in target DNAI information (target DNAI info), and a value of a target DNAI in the target DNAI information is a preset value, to indicate the first access and mobility management function network element to remove the intermediate session management function network element.

In the foregoing manner, the intermediate session management function network element is implicitly indicated to be removed in a manner in which the first message does not include the first DNAI, so that bit overheads can be reduced.

According to a second aspect, a communication method is provided. The method includes: A first access and mobility management function network element receives first information from a first session management function network element, where the first information is used by the first access and mobility management function network element to remove an intermediate session management function network element, and the intermediate session management function network element is a session management function network element that is inserted by the first access and mobility management function network element and that serves a current session. The first access and mobility management function network element sends second information to the first session management function network element based on the first information, where the second information is used by the first session management function network element to establish a session management context or update a session management context.

For example, the first access and mobility management function network element receives the first information from the first session management function network element through the intermediate session management function network element.

In the foregoing manner, after receiving indication information for removing the intermediate session management function network element, the first access and mobility management function network element can interact with the first session management function network element, so that the first session management function network element establishes the session management context or updates the session management context, and removes the intermediate session management function network element and an intermediate user plane function network element. The foregoing manner can avoid a problem that a path latency for accessing a data network by a user is increased because there is a redundant node on a user plane path and a hop count of the path is increased, to improve user experience. In addition, a state before the intermediate session management function network element is inserted by a network side and an intermediate user plane path is inserted into the user plane path can be further restored.

In a possible implementation, the method further includes: The first access and mobility management function network element sends third information to the intermediate session management function network element when the first access and mobility management function network element has selected an intermediate session management function network element, where the third information indicates to release a session resource in the intermediate session management function network element.

It may be understood that, that the first access and mobility management function network element has selected an intermediate session management function network element may also be described as that the intermediate session management function network element exists in the current session.

For example, the third information is included in an SMF_PDU session_release SM context request (Nsmf_PDU session_release SM context request).

In a possible implementation, the first information includes a first data network access identifier DNAI and first indication information, and the first indication information indicates to remove the intermediate session management function network element.

For example, the first information may be target DNAI information (target DNAI info). The target DNAI information includes two parts: a target DNAI (target DNAI) and an SMF selection type (a current session or a next session). The first DNAI is used as the target DNAI. The first indication information is used as an option in the SMF selection type, and the first indication information may be represented by an enumerated value. For example, '0' indicates the current session, '1' indicates the next session, and '2' indicates intermediate session management function network element removal (I-SMF removal).

In a possible implementation, the first information is included in a first message, and the first message does not include a first data network access identifier DNAI.

For example, the first information may be included in target DNAI information (target DNAI info). The target DNAI information does not include a target DNAI, and includes only an SMF selection type.

In the foregoing manner, the intermediate session management function network element is implicitly indicated to be removed in a manner in which the first message does not include the first DNAI, so that bit overheads can be reduced.

For example, the first message includes target DNAI information (target DNAI info), and the first information is specifically: a target DNAI in the target DNAI information has a preset value, to indicate the first access and mobility management function network element to remove the intermediate session management function network element. After receiving the first message, the first access and mobility management function network element determines, based on that the DNAI has the preset value, to remove the intermediate session management function network element.

A value of the DNAI in the target DNAI information is set to the preset value to indicate to remove the intermediate session management function network element, and a structure of the target DNAI information is not changed. After receiving the first message, the first access and mobility management function network element parses the target DNAI in the first message to obtain the value of the target DNAI, and determines, based on that the value is the preset value, whether to remove the intermediate session management function network element.

According to a third aspect, a communication apparatus is provided. The apparatus includes a processing module, configured to determine, by a first session management function network element, whether a first data network access identifier DNAI is in a service area of the first session management function network element; and a transceiver module, configured to: send, by the first session management function network element, first information to a first access and mobility management function network element when the first DNAI is in the service area of the first session management function network element, where the first information is used by the first access and mobility management function network element to remove an intermediate session management function network element, and the intermediate session management function network element is a session management function network element that is inserted by the first access and mobility management function network element and that serves a current session.

For example, the first session management function network element may directly send the first information to the first access and mobility management function network element.

For example, when the intermediate session management function network element exists in the current session, the intermediate session management function network element may alternatively be used to send the first information to the first access and mobility management function network element.

It should be noted that the first information indicates to remove the intermediate session management function network element. The intermediate session management function network element is a session management function network element that is inserted by the access and mobility management function network element into the current session after the session management function network element establishes the current session and when the session management function network element cannot serve the target DNAI, so that the intermediate session management function network element can serve the target DNAI. Therefore, the intermediate session management function network element is a general term for the first session management function network element. That is, although the first information indicates to remove the intermediate session management function network element, the first information does not indicate a specific intermediate session management function network element. In other words, the first session management function network element knows whether the intermediate session management function network element is inserted into the current session, and may indicate the access and mobility management function network element to remove the intermediate session management function network element inserted into the current session, without knowing a specific intermediate session management function network element.

In the foregoing manner, when the first session management function network element determines that the first session management function network element can serve the first DNAI, regardless of whether the intermediate session management function network element is inserted into the current session, or if the intermediate session management function network element is inserted into the current session, regardless of whether the intermediate session management function network element can serve the first DNAI, the current session no longer needs the intermediate session management function network element. In this case, an intermediate user plane function network element managed by the intermediate session management function network element is a redundant node on a user plane path, and increases a hop count for accessing a data network by a user. In the foregoing manner, when the first session management function network element determines that the first session management function network element can serve the first DNAI, the first session management function network element indicates the first mobility session management function network element to remove the intermediate session management function network element to remove the intermediate user plane function network element. This can avoid a problem that the path latency for accessing the data network by the user is increased because there is the redundant node on the user plane path and the hop count of the path is increased, to improve user experience. In addition, a state before the intermediate session management function network element is inserted by a network side and an intermediate user plane path is inserted into the user plane path can be further restored.

In a possible implementation, the apparatus further includes: The transceiver module is configured to send, by the first session management function network element, the first information when the first session management function network element determines that the first DNAI is in the service area of the first session management function network element, and the first access and mobility management function network element has selected an intermediate session management function network element.

It may be understood that, that the first access and mobility management function network element has selected an intermediate session management function network element may also be described as that the intermediate session management function network element exists in the current session.

In the foregoing manner, the intermediate session management function network element can be further indicated to be removed only when the intermediate session management function network element has been inserted into the current session and the first session management function network element can serve the first DNAI.

In a possible implementation, the apparatus further includes: When the first session management function network element determines that the first DNAI is beyond the service area of the first session management function network element, the first access and mobility management function network element has selected an intermediate session management function network element, and the first DNAI is in a service area of the intermediate session management function network element, the transceiver module is configured to send, by the first session management function network element, the first DNAI to the intermediate session management function network element, to enable the intermediate session management function network element to determine an intermediate user plane function network element based on the first DNAI.

In a current solution, when the first session management function network element determines that the first DNAI is beyond the service area of the first session management function network element, the first access and mobility management function network element has selected the intermediate session management function network element, and the first DNAI is in the service area of the intermediate session management function network element, the first session management function network element sends target DNAI information (target DNAI info, including the first DNAI and an SMF selection type) to the first access and mobility management function network element, and then the first access and mobility management function network element sends the first DNAI to the intermediate session management function network element. However, in the foregoing manner of this application, the first session management function network element directly sends the first DNAI to the intermediate session management function network element, to enable the intermediate session management function network element to determine the intermediate user plane function network element based on the first DNAI, to shorten an information transmission path and improve user experience. In addition, the first access and mobility management function network element does not select a new intermediate session management function network element based on the first DNAI, and does not reuse an original intermediate session management function network element that can serve the first DNAI.

In a possible implementation, the apparatus includes: When the first session management function network element determines that the first DNAI is beyond the service area of the first session management function network element and is beyond the service area of the intermediate session management function network element, the transceiver module is configured to send, by the first session management function network element, the first information to the first access and mobility management function network element through the intermediate session management function network element. The first information indicates the first access and mobility management function network element to select the intermediate session management function network element.

In the foregoing manner, the first information is sent to the first access and mobility management function network element only when the first DNAI is beyond the service area of the first session management network element and the service area of the intermediate session management function network element, to indicate to select the intermediate session management function to serve the first DNAI. This avoids unnecessary signaling exchange between the first session management function network element and the first access and mobility management function network element.

In a possible implementation, the apparatus includes: When the first session management function network element determines that the first DNAI is in the service area of the first session management function network element, the processing module is configured to: determine, by the first session management function network element, a first user plane function network element based on the first DNAI; and the first session management function network element sends the first DNAI to the first user plane function network element.

In a possible implementation, the apparatus includes: When the first session management function network element determines that the first DNAI is in the service area of the first session management function network element, and the first session management function network element determines that the first access and mobility management function network element has selected an intermediate session management function network element and that the first DNAI is beyond the service area of the intermediate session management function network element, the processing module is configured to determine, by the first session management function network element, a first user plane function network element based on the first DNAI; and the transceiver module is configured to send, by the first session management function network element, the first DNAI to the first user plane function network element.

In a possible implementation, the apparatus includes: When the first session management function network element determines that the first DNAI is in the service area of the first session management function network element, and the first session management function network element determines that the first access and mobility management function network element does not select an intermediate session management function network element, the processing module is configured to determine, by the first session management function network element, a first user plane function network element based on the first DNAI; and the transceiver module is configured to send, by the first session management function network element, the first DNAI to the first user plane function network element.

It may be understood that, that the first access and mobility management function network element does not select an intermediate session management function network element may also be described as that no intermediate session management function network element exists in the current session.

In the foregoing manner, when determining that the first access and mobility management function network element does not select the intermediate session management function network element, the first session management function network element directly determines the first user plane function network element (a PSA) based on the first DNAI, and directly performs service offloading processing.

In a possible implementation, the first information includes the first DNAI and first indication information, and the first indication information indicates to remove the intermediate session management function network element.

For example, the first information may be target DNAI information (target DNAI info). The target DNAI information includes two parts: a target DNAI (target DNAI) and an SMF selection type (a current session or a next session). The first DNAI is used as the target DNAI. The first indication information is used as an option in the SMF selection type, and the first indication information may be represented by an enumerated value. For example, '0' indicates the current session, '1' indicates the next session, and '2' indicates intermediate session management function network element removal (I-SMF removal).

In a possible implementation, the first information is included in a first message, and the first message does not include the first DNAI.

In the foregoing manner, the intermediate session management function network element is implicitly indicated to be removed in a manner in which the first message does not include the first DNAI, so that bit overheads can be reduced.

For example, the first message includes target DNAI information (target DNAI info), and the first message is specifically: a target DNAI in the target DNAI information has a preset value, to indicate the first access and mobility management function network element to remove the intermediate session management function network element. A value of the DNAI in the target DNAI information is set to the preset value to indicate to remove the intermediate session management function network element, and a structure of the target DNAI information is not changed, so that logic of the first session management function network element can be simplified.

According to a fourth aspect, a communication apparatus is provided. The apparatus includes a transceiver module, configured to receive, by a first access and mobility management function network element, first information from a first session management function network element, where the first information is used by the first access and mobility management function network element to remove an intermediate session management function network element, and the intermediate session management function network element is a session management function network element that is inserted by the first access and mobility management function network element and that serves a current session; and a processing module, configured to send, by the first access and mobility management function network element, second information to the first session management function network element based on the first information, where the second information is used by the first session management function network element to establish a session management context or update a session management context.

For example, the first access and mobility management function network element receives the first information from the first session management function network element through the intermediate session management function network element.

In the foregoing manner, after receiving indication information for removing the intermediate session management function network element, the first access and mobility management function network element can interact with the first session management function network element, so that the first session management function network element establishes the session management context or updates the session management context, and removes the intermediate session management function network element and an intermediate user plane function network element. Compared with a current solution in which how to remove the intermediate session management function network element is not described, the foregoing manner can avoid a problem that a path latency for accessing a data network by a user is increased because there is a redundant node on a user plane path and a hop count of the path is increased, to improve user experience. In addition, a state before the intermediate session management function network element is inserted by a network side and an intermediate user plane path is inserted into the user plane path can be further restored.

In a possible implementation, the apparatus further includes: The transceiver module is configured to send, by the first access and mobility management function network element, third information to the intermediate session management function network element when the first access and mobility management function network element has selected an intermediate session management function network element, where the third information indicates to release a session resource in the intermediate session management function network element.

It may be understood that, that the first access and mobility management function network element has selected an intermediate session management function network element may also be described as that the intermediate session management function network element exists in the current session.

For example, the third information is included in an SMF_PDU session_release SM context request (Nsmf_PDU session_release SM context request).

In a possible implementation, the first information includes a first data network access identifier DNAI and first indication information, and the first indication information indicates to remove the intermediate session management function network element.

For example, the first information may be target DNAI information (target DNAI info). The target DNAI information includes two parts: a target DNAI (target DNAI) and an SMF selection type (a current session or a next session). The first DNAI is used as the target DNAI. The first indication information is used as an option in the SMF selection type, and the first indication information may be represented by an enumerated value. For example, '0' indicates the current session, '1' indicates the next session, and '2' indicates intermediate session management function network element removal (I-SMF removal).

In a possible implementation, the first information is included in a first message, and the first message does not include a first data network access identifier DNAI.

For example, the first information may be included in target DNAI information (target DNAI info). The target DNAI information does not include a target DNAI, and includes only an SMF selection type.

In the foregoing manner, the intermediate session management function network element is implicitly indicated to be removed in a manner in which the first message does not include the first DNAI, so that bit overheads can be reduced.

For example, the first message includes target DNAI information (target DNAI info), and the first information is specifically: a target DNAI in the target DNAI information has a preset value, to indicate the first access and mobility management function network element to remove the intermediate session management function network element. A value of the DNAI in the target DNAI information is set to the preset value to indicate to remove the intermediate session management function network element, and a structure of the target DNAI information is not changed.

According to a fifth aspect, a communication method is provided. The method includes: A first access and mobility management function network element receives a first data network access identifier DNAI and first indication information from a first session management function network element, where the first indication information indicates that the first DNAI is used for a current session. The first access and mobility management function network element determines, based on the first DNAI and a service area of the first session management function network element, whether the first DNAI is in the service area of the first session management function network element. The first access and mobility management function network element sends first information to the first session management function network element when the first DNAI is in the service area of the first session management function network element, where the first information is used by the first session management function network element to establish a session management context or update a session management context.

For example, the first access and mobility management function network element receives the first DNAI and the first indication information from the first session management function network element through an intermediate session management function network element.

For example, the first DNAI and the first indication information are included in target DNAI information (target DNAI info).

It should be noted that when the session management function network element cannot serve the DNAI, the access and mobility management function network element inserts the intermediate session management function network element into the current session. The session management function network element that establishes the current session cannot determine the intermediate session management function network element. In other words, although the first information indicates to remove the intermediate session management function network element, the first information does not indicate a specific intermediate session management function network element.

In the foregoing manner, when the first access and mobility management function determines that the first DNAI is in the service area of the first session management function network element, regardless of whether the intermediate session management function network element is inserted into the current session, or if the intermediate session management function network element is inserted into the current session, regardless of whether the intermediate session management function network element can serve the first DNAI, the current session no longer needs the intermediate session management function network element. In this case, an intermediate user plane function network element managed by the intermediate session management function network element is a redundant node on a user plane path, and increases a hop count for accessing a data network by a user. In the foregoing manner, after determining that the first DNAI is in the service area of the first session management function network element, the first mobility session management function network element directly interacts with the first session management function network element, so that the first session management function network element establishes the session management context or updates the session management context, to remove the intermediate session management function network element. This can avoid a problem that the path latency for accessing the data network by the user is increased because there is the redundant node on the user plane path and the hop count of the path is increased, to improve user experience. In addition, a state before the intermediate session management function network element is inserted by a network side and an intermediate user plane path is inserted into the user plane path can be further restored.

In a possible implementation, the method further includes: When the first access and mobility management function network element has selected an intermediate session management function network element, the first access and mobility management function network element determines, based on the first DNAI and the service area of the first session management function network element, whether the first DNAI is in the service area of the first session management function network element, where the intermediate session management function network element is a session management function network element that is inserted by the first access and mobility management function network element and that serves the current session.

In a possible implementation, the first access and mobility management function network element sends the first information to the first session management function network element when the first DNAI is in the service area of the first session management function network element.

In a possible implementation, when the first DNAI is beyond the service area of the first session management function network element and is in a service area of the intermediate session management function network element, the first access and mobility management function network element sends the first DNAI to the intermediate session management function network element, to enable the intermediate session management function network element to select an intermediate user plane function network element based on the first DNAI.

In a possible implementation, when the first DNAI is beyond the service area of the first session management function network element and is beyond a service area of the intermediate session management function network element, the first access and mobility management function network element selects an intermediate session management function network element based on the first DNAI, to serve the first DNAI.

The intermediate session management function network element selects an intermediate user plane function network element based on the first DNAI.

It may be understood that, that the first access and mobility management function network element has selected an intermediate session management function network element may also be described as that the intermediate session management function network element exists in the current session.

In the foregoing manner, the intermediate session management function network element can be further removed only when the intermediate session management function network element has been inserted into the current session and the first session management function network element can serve the first DNAI.

Optionally, the first session management function network element sends the first DNAI and the first indication information to the first access and mobility management function network element when the first DNAI is in the service area of the first session management function network element, and no intermediate session management function network element exists.

In a possible implementation, the method further includes: The first access and mobility management function network element selects an intermediate session management function network element when the first DNAI is beyond the service area of the first session management function network element.

According to a sixth aspect, a communication method is provided. The method includes: A first session management function network element determines whether a first data network access identifier DNAI is in a service area of the first session management function network element. The first session management function network element sends the first DNAI and first indication information to the first access and mobility management function network element when the first DNAI is in the service area of the first session management function network element, where the first indication information indicates that the first DNAI is used for a current session.

For example, the first session management function network element sends the first DNAI and the first indication information to the first access and mobility management function network element through an intermediate session management function network element.

For example, the first DNAI and the first indication information are included in target DNAI information (target DNAI info).

It should be noted that when the session management function network element cannot serve the DNAI, the access and mobility management function network element inserts the intermediate session management function network element into the current session. The session management function network element that establishes the current session cannot determine the intermediate session management function network element. In other words, although the first information indicates to remove the intermediate session management function network element, the first information does not indicate a specific intermediate session management function network element.

In the foregoing manner, when the first DNAI is in the service area of the first session management function network element, regardless of whether the intermediate session management function network element is inserted into the current session, or if the intermediate session management function network element is inserted into the current session, regardless of whether the intermediate session management function network element can serve the first DNAI, the current session no longer needs the intermediate session management function network element. In this case, an intermediate user plane function network element managed by the intermediate session management function network element is a redundant node on a user plane path, and increases a hop count for accessing a data network by a user. In the foregoing manner, after determining that the first DNAI is in the service area of the first session management function network element, the first session management function network element sends the first DNAI and the first indication information to the first access and mobility management function network element, to trigger a procedure in which the first access and mobility management function network element removes the intermediate session management function network element. This can avoid a problem that the path latency for accessing the data network by the user is increased because there is the redundant node on the user plane path and the hop count of the path is increased, to improve user experience. In addition, a state before the intermediate session management function network element is inserted by a network side and an intermediate user plane path is inserted into the user plane path can be further restored.

In a possible implementation, the method further includes: The first session management function network element sends the first DNAI and the first indication information when the first session management function network element determines that the first DNAI is in the service area of the first session management function network element, and the first access and mobility management function network element has selected an intermediate session management function network element, where the intermediate session management function network element is a session management function network element that is inserted by the first access and mobility management function network element and that serves the current session.

In the foregoing manner, the intermediate session management function network element can be further removed only when the intermediate session management function network element has been inserted into the current session and the first session management function network element can serve the first DNAI.

In a possible implementation, the method further includes: When the first DNAI is beyond the service area of the first session management function network element, and the first DNAI is in a service area of the intermediate session management function network element, the first session management function network element sends the first DNAI to the intermediate session management function network element, to enable the intermediate session management function network element to select a first user plane function network element based on the first DNAI.

In the foregoing manner, when determining that the first DNAI is beyond the service area of the first session management function network element and that the first DNAI is in the service area of the intermediate session management function network element, the first session management function network element is enabled to directly send the first DNAI to the intermediate session management function network element, to enable the intermediate session management function network element to select the first user plane function network element based on the first DNAI. Compared with a current solution in which the first DNAI is first sent to the access and mobility management function network element and then is sent by the access and mobility management function network element to the intermediate session management function network element, in the foregoing manner, a quantity of transmitted control plane information can be reduced, and user experience can be improved.

According to a seventh aspect, a communication apparatus is provided. The apparatus includes a transceiver module, configured to receive, by a first access and mobility management function network element, a first data network access identifier DNAI and first indication information from a first session management function network element, where the first indication information indicates that the first DNAI is used for a current session; and a processing module, configured to determine, by the first access and mobility management function network element based on the first DNAI and a service area of the first session management function network element, whether the first DNAI is in a service area of the first session management function network element. The transceiver module is configured to send, by the first access and mobility management function network element, first information to the first session management function network element when the first DNAI is in the service area of the first session management function network element, where the first information is used by the first session management function network element to establish a session management context or update a session management context.

For example, the first access and mobility management function network element receives the first DNAI and the first indication information from the first session management function network element through an intermediate session management function network element.

For example, the first DNAI and the first indication information are included in target DNAI information (target DNAI info).

It should be noted that when the session management function network element cannot serve the DNAI, the access and mobility management function network element inserts the intermediate session management function network element into the current session. The session management function network element that establishes the current session cannot determine the intermediate session management function network element. In other words, although the first information indicates to remove the intermediate session management function network element, the first information does not indicate a specific intermediate session management function network element.

In the foregoing manner, when the first access and mobility management function determines that the first DNAI is in the service area of the first session management function network element, regardless of whether the intermediate session management function network element is inserted into the current session, or if the intermediate session management function network element is inserted into the current session, regardless of whether the intermediate session management function network element can serve the first DNAI, the current session no longer needs the intermediate session management function network element. In this case, an intermediate user plane function network element managed by the intermediate session management function network element is a redundant node on a user plane path, and increases a hop count for accessing a data network by a user. In the foregoing manner, after determining that the first DNAI is in the service area of the first session management function network element, the first mobility session management function network element directly interacts with the first session management function network element, so that the first session management function network element establishes the session management context or updates the session management context, to remove the intermediate session management function network element. This can avoid a problem that the path latency for accessing the data network by the user is increased because there is the redundant node on the user plane path and the hop count of the path is increased, to improve user experience. In addition, a state before the intermediate session management function network element is inserted by a network side and an intermediate user plane path is inserted into the user plane path can be further restored.

In a possible implementation, the apparatus further includes: When the first access and mobility management function network element has selected an intermediate session management function network element, the processing module is configured to determine, by the first access and mobility management function network element based on the first DNAI and the service area of the first session management function network element, whether the first DNAI is in the service area of the first session management function network element, where the intermediate session management function network element is a session management function network element that is inserted by the first access and mobility management function network element and that serves the current session.

In a possible implementation, the transceiver module is configured to send, by the first access and mobility management function network element, the first information to the first session management function network element when the first DNAI is in the service area of the first session management function network element.

In a possible implementation, when the first DNAI is beyond the service area of the first session management function network element and is in a service area of the intermediate session management function network element, the transceiver module is configured to send, by the first access and mobility management function network element, the first DNAI to the intermediate session management function network element, to enable the intermediate session management function network element to select an intermediate user plane function network element based on the first DNAI.

In a possible implementation, when the first DNAI is beyond the service area of the first session management function network element and is beyond a service area of the intermediate session management function network element, the processing module is configured to select, by the first access and mobility management function network element, the intermediate session management function network element based on the first DNAI to serve the first DNAI.

The intermediate session management function network element selects the intermediate user plane function network element based on the first DNAI.

It may be understood that, that the first access and mobility management function network element has selected an intermediate session management function network element may also be described as that the intermediate session management function network element exists in the current session.

In the foregoing manner, the intermediate session management function network element can be further removed only when the intermediate session management function network element has been inserted into the current session and the first session management function network element can serve the first DNAI.

Optionally, the first session management function network element sends the first DNAI and the first indication information to the first access and mobility management function network element when the first DNAI is in the service area of the first session management function network element, and no intermediate session management function network element exists.

In a possible implementation, the apparatus further includes: The processing module is configured to select, by the first access and mobility management function network element, an intermediate session management function network element when the first DNAI is beyond the service area of the first session management function network element.

According to an eighth aspect, a communication apparatus is provided. The apparatus includes a processing module, configured to determine, by a first session management function network element, whether a first data network access identifier DNAI is in a service area of the first session management function network element; and a transceiver module, configured to send, by the first session management function network element, the first DNAI and first indication information to a first access and mobility management function network element when the first DNAI is in the service area of the first session management function network element, where the first indication information indicates that the first DNAI is used for a current session.

For example, the first session management function network element sends the first DNAI and the first indication information to the first access and mobility management function network element through an intermediate session management function network element.

For example, the first DNAI and the first indication information are included in target DNAI information (target DNAI info).

It should be noted that when the session management function network element cannot serve the DNAI, the access and mobility management function network element inserts the intermediate session management function network element into the current session. The session management function network element that establishes the current session cannot determine the intermediate session management function network element. In other words, although the first information indicates to remove the intermediate session management function network element, the first information does not indicate a specific intermediate session management function network element.

In the foregoing manner, when the first DNAI is in the service area of the first session management function network element, regardless of whether the intermediate session management function network element is inserted into the current session, or if the intermediate session management function network element is inserted into the current session, regardless of whether the intermediate session management function network element can serve the first DNAI, the current session no longer needs the intermediate session management function network element. In this case, an intermediate user plane function network element managed by the intermediate session management function network element is a redundant node on a user plane path, and increases a hop count for accessing a data network by a user. In the foregoing manner, after determining that the first DNAI is in the service area of the first session management function network element, the first session management function network element sends the first DNAI and the first indication information to the first access and mobility management function network element, to trigger a procedure in which the first access and mobility management function network element removes the intermediate session management function network element. This can avoid a problem that the path latency for accessing the data network by the user is increased because there is the redundant node on the user plane path and the hop count of the path is increased, to improve user experience. In addition, a state before the intermediate session management function network element is inserted by a network side and an intermediate user plane path is inserted into the user plane path can be further restored.

In a possible implementation, the apparatus further includes: The transceiver module is configured to send, by the first session management function network element, the first DNAI and the first indication information when the first session management function network element determines that the first DNAI is in the service area of the first session management function network element, and the first access and mobility management function network element has selected an intermediate session management function network element, where the intermediate session management function network element is a session management function network element that is inserted by the first access and mobility management function network element and that serves the current session.

In the foregoing manner, the intermediate session management function network element can be further removed only when the intermediate session management function network element has been inserted into the current session and the first session management function network element can serve the first DNAI.

In a possible implementation, the apparatus further includes: When the first DNAI is beyond the service area of the first session management function network element, and the first DNAI is in a service area of the intermediate session management function network element, the transceiver module is configured to send, by the first session management function network element, the first DNAI to the intermediate session management function network element, to enable the intermediate session management function network element to select a first user plane function network element based on the first DNAI.

In the foregoing manner, when determining that the first DNAI is beyond the service area of the first session management function network element and that the first DNAI is in the service area of the intermediate session management function network element, the first session management function network element is enabled to directly send the first DNAI to the intermediate session management function network element, to enable the intermediate session management function network element to select the first user plane function network element based on the first DNAI. Compared with a current solution in which the first DNAI is first sent to the access and mobility management function network element and then is sent by the access and mobility management function network element to the intermediate session management function network element, in the foregoing manner, a quantity of transmitted control plane information can be reduced, and user experience can be improved.

According to a ninth aspect, a communication apparatus is provided. The communication apparatus may be the communication apparatus according to any one of the third aspect and the implementations of the third aspect, or any one of the fourth aspect and the implementations of the fourth aspect, or any one of the seventh aspect and the implementations of the seventh aspect, or any one of the eighth aspect and the implementations of the eighth aspect, or a chip disposed in the communication apparatus. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the communication apparatus in the foregoing method embodiments.

For example, the memory and the processor may be integrated together, or may be independent components.

According to a tenth aspect, a computer program product is provided. The computer program product includes a computer program. When the computer program is run by a computer, the computer is enabled to perform the method according to any one of the first aspect and the possible implementations of the first aspect or the method according to any one of the second aspect and the possible implementations of the second aspect.

According to an eleventh aspect, a computer program product is provided. The computer program product includes a computer program. When the computer program is run by a computer, the computer is enabled to perform the method according to any one of the fifth aspect and the possible implementations of the fifth aspect or the method according to any one of the sixth aspect and the possible implementations of the sixth aspect.

According to a twelfth aspect, this application provides a chip system. The chip system includes a processor, configured to implement the method according to any one of the first aspect or the possible implementations of the first aspect or the method according to any one of the second aspect or the possible implementations of the second aspect. In a possible design, the chip system further includes a memory, configured to store program instructions and/or data. The chip system may include a chip, or may include a chip and another discrete component.

According to a thirteenth aspect, this application provides a chip system. The chip system includes a processor, configured to implement the method according to any one of the fifth aspect or the possible implementations of the fifth aspect or the method according to any one of the sixth aspect or the possible implementations of the sixth aspect. In a possible design, the chip system further includes a memory, configured to store program instructions and/or data. The chip system may include a chip, or may include a chip and another discrete component.

According to a fourteenth aspect, this application provides a computer-readable storage medium. The computer-readable storage medium stores a computer program. When the computer program is run, a communication apparatus is enabled to perform the method according to any one of the first aspect and the possible implementations of the first aspect or the method according to any one of the second aspect and the possible implementations of the second aspect.

According to a fifteenth aspect, this application provides a computer-readable storage medium. The computer-readable storage medium stores a computer program. When the computer program is run, a communication apparatus is enabled to perform the method according to any one of the fifth aspect and the possible implementations of the fifth aspect or the method according to any one of the sixth aspect and the possible implementations of the sixth aspect.

According to the communication method and apparatus provided in this application, the problem that when the user no longer accesses the MEC platform, the offloading point inserted into the user plane path increases the hop count of the path for accessing the data network, and consequently the path latency is increased, resulting in the deterioration of user experience is resolved. In addition, the state before the intermediate session management function network element is inserted by the network side and the intermediate user plane path is inserted into the user plane path can be further restored.

### BRIEF DESCRIPTION OF DRAWINGS

FIG. 1 is a schematic diagram of an example of a MEC scenario according to this application;
FIG. 2 is a diagram of an example of a 5G architecture to which embodiments of this application are applicable;
FIG. 3 is a schematic diagram of an example of an ETSUN architecture according to this application;
FIG. 4 is a schematic flowchart of interaction between a session management function network element and an access and mobility management function network element according to an embodiment of this application;
FIG. 5 is a schematic flowchart of interaction between a session management function network element and an access and mobility management function network element according to an embodiment of this application;
FIG. 6 is a schematic flowchart of an example according to an embodiment of this application;
FIG. 7 is a schematic flowchart of another example according to an embodiment of this application;
FIG. 8 is a schematic structural diagram of an example of a possible communication apparatus according to an embodiment of this application; and
FIG. 9 is a schematic structural diagram of another possible communication apparatus according to an embodiment of this application.

### DESCRIPTION OF EMBODIMENTS

The following describes technical solutions of this application with reference to the accompanying drawings. It is clearly that the described embodiments are some but not all of embodiments of this application. All other embodiments obtained by a person of ordinary skill in the art based on embodiments of this application without creative efforts shall be in the protection scope of this application.

The technical solutions of embodiments of this application may be applied to various communication systems, for example, a long term evolution (Long Term Evolution, LTE) system, an LTE frequency division duplex (Frequency division duplex, FDD) system, an LTE time division duplex (Time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system or a new radio access technology (new radio Access Technology, NR), or a next-generation communication system such as 6G. The 5G mobile communication system may be non-standalone (non-standalone, NSA) or standalone (standalone, SA).

The technical solutions provided in this application may be further applied to machine type communication (machine type communication, MTC), long term evolution-machine (Long Term Evolution-machine, LTE-M), and a device-to-device (device-to device, D2D) network, a machine-to-machine (machine-to-machine, M2M) network, an internet of things (internet of things, IoT) network, or other networks. The IoT network may include, for example, an internet of vehicles. Communication modes in an internet of vehicles system are collectively referred to as vehicle to X (vehicle to X, V2X, where X can represent anything). For example, the V2X may include: vehicle to vehicle (vehicle to vehicle, V2V) communication, vehicle to infrastructure (vehicle to infrastructure, V2I) communication, vehicle to pedestrian (vehicle to vehicle, V2P) communication, or vehicle to network (vehicle to network, V2N) communication.

The technical solutions provided in this application may be further applied to a future communication system, for example, a 6th generation (6th Generation, 6G) mobile communication system. This is not limited in this application.

In embodiments of this application, a network device may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, or a transmission point (transmission point, TP) or a transmission and reception point (transmission and reception point, TRP), or may be a gNB or a transmission point (transmission/reception point, TRP or TP) in a 5G system, for example, an NR system, one antenna panel or a group of antenna panels (including a plurality of antenna panels) of a base station in a 5G system, or a network node that forms a gNB or a transmission point, for example, a baseband unit (baseband unit, BBU) or a distributed unit (distributed unit, DU), or a base station in a next-generation 6G communication system.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally changed into information at the PHY layer, or is changed from information at the PHY layer. Therefore, in this architecture, higher layer signaling such as RRC layer signaling may also be considered as being sent by the DU, or by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-speed data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device having a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that dedicated to only one type of application function and need to collaboratively work with other devices such as smartphones, for example, various smart bands or smart jewelry for monitoring physical signs.

In addition, the terminal device may alternatively be a terminal device in an internet of things (internet of things, IoT) system. An IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In addition, the terminal device may further include sensors such as an intelligent printer, a train detector, and a gas station, and main functions include: collecting data (which is a function of some terminal devices), receiving control information and downlink data of the network device, sending an electromagnetic wave, and transmitting uplink data to the network device.

For ease of understanding embodiments of this application, the following descriptions are provided.

First, in this application, for ease of description, when numbering is involved, numbering may consecutively start from 0, or may consecutively start from 1, or may start from any parameter. It should be understood that the foregoing descriptions are all settings for ease of describing the technical solutions provided in embodiments of this application, but are not intended to limit the scope of this application.

Second, "first", "second", and various numbers in the following embodiments are merely used for differentiation for ease of description, and are not intended to limit the scope of embodiments of this application, for example, are used for differentiating between different indication information.

Third, the term "storage" in embodiments of this application may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Fourth, the term "protocol" in embodiments of this application may refer to a standard protocol in the communication field, for example, including an LTE protocol, an NR protocol, and a related protocol applied to a future communication system. This is not limited in this application.

Fifth, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be in a singular form or a plural form. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c. Each of a, b, and c may be in a singular form or a plural form.

Sixth, in embodiments of this application, "being used to indicate" may include "being used to directly indicate" and "being used to indirectly indicate". For example, when a piece of indication information is described as indicating information I, the indication information may directly indicate I or indirectly indicate I. However, it does not necessarily indicate that the indication information carries I.

Information indicated by indication information is referred to as to-be-indicated information. In a specific implementation process, there are a plurality of manners of indicating the to-be-indicated information, for example, but not limited to, the following manners: The to-be-indicated information is directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of a plurality of pieces of information that is pre-agreed on (for example, stipulated in a protocol), to reduce indication overheads to some extent. In addition, a common part of all pieces of information may be further identified and indicated in a unified manner, to reduce indication overheads caused by separately indicating same information.

Moreover, specific indication manners may alternatively be various existing indication manners, for example, but not limited to, the foregoing indication manners and various combinations thereof. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manners in embodiments of this application should be understood as covering various methods that can enable a to-be-indicated party to learn of the to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but is not limited to, one or a combination of at least two of radio resource control signaling such as radio resource control (radio resource control, RRC) signaling, medium access control (medium access control, MAC) layer signaling such as a MAC-information element (control element, CE), and physical layer signaling such as downlink control information (downlink control information, DCI).

For ease of understanding, the following briefly describes basic concepts in embodiments of this application.

A data network access identifier (data network access identifier, DNAI) is an identifier used to access, through a user plane, one or more data networks on which an application is deployed. The DNAI may be used to represent an identifier of a user plane path for accessing the data network. For example, a path for accessing MEC 1 may be represented by a DNAI-1, and a path for accessing MEC 2 may be represented by a DNAI-2.

An uplink classifier (uplink classifier, ULCL) is configured to offload service flows to a MEC platform corresponding to a target DNAI.

A branching point (branching point, BP) is configured to offload service flows to the MEC platform corresponding to the target DNAI.

A protocol data unit session anchor (protocol data unit session anchor, PSA) indicates a UPF connected to an N6 interface.

Target DNAI information (target DNAI info): The target DNAI information includes a DNAI and an SMF selection type (selection type). The DNAI may be used by an access and mobility management function (access and mobility management function, AMF) to select an SMF or an I-SMF based on the DNAI. The SMF selection type indicates a type of SMF selection, and has two enumerated values: a current session and a next session. The "current session" indicates that the AMF selects an SMF (I-SMF) to be inserted into a current network side for the current session, and the "next session" indicates that the AMF selects an SMF for a next session. For example, for a session reestablished in a session and service continuity mode (session and service continuity mode, SSC mode) 2/3, the AMF selects an SMF based on the DNAI.

The following describes a system architecture or a scenario to which embodiments of this application may be applied. FIG. 2 is an example of a 5G architecture diagram to which embodiments of this application are applicable. The following describes each network element that may be involved in a network architecture 100 shown in FIG. 2.
1. Terminal device 101: For details, refer to the foregoing descriptions. Details are not described herein again.
2. (Radio) access network (radio access network, (R)AN) network element 102: For details, refer to the foregoing descriptions. Details are not described herein again.
   It should be noted that the foregoing "network element" may also be referred to as an entity, a device, an apparatus, a module, or the like. This is not particularly limited in this application. In addition, in this application, for ease of understanding and description, a description of the "network element" is omitted in some descriptions. For example, the (R)AN network element is referred to as a (R)AN for short. In this case, the "(R)AN network element" should be understood as a (R)AN network element or a (R)AN entity. Descriptions of a same case or similar cases below are omitted below.
3. A user plane network element 103 is used for packet routing and forwarding, quality of service (quality of service, QoS) processing of user plane data, and the like.
   In a 5G communication system, the user plane network element may be a user plane function (user plane function, UPF) network element. In a future communication system, the user plane network element may still be the UPF network element, or may have another name. This is not limited in this application.
4. A data network 104 is a network for providing a data service, for example, an internet service or a voice service.
   In the 5G communication system, the data network may be a data network (data network, DN). In the future communication system, the data network may still be the DN, or may have another name. This is not limited in this application.
5. An access management network element 105 is mainly used for mobility management, access management, and the like, and may be configured to implement functions, for example, lawful interception and access authorization/authentication, other than session management in functions of a mobility management entity (mobility management entity, MME).
   In the 5G communication system, the access management network element may be an access and mobility management function (access and mobility management function, AMF) network element. In the future communication system, the access management network element may still be the AMF network element, or may have another name. This is not limited in this application.
6. A session management network element 106 is mainly configured to: manage a session, allocate and manage an internet protocol (internet protocol, IP) address of a terminal device, select and manage a user plane network element and a termination point for a policy control and charging function interface, notify downlink data, and so on.
   In the 5G communication system, the session management network element may be a session management function (session management function, SMF) network element. In the future communication system, the session management network element may still be the SMF network element, or may have another name. This is not limited in this application.
7. A policy control network element 107 is used for a unified policy framework to guide network behavior, and provides policy rule information and the like for a control plane function network element (for example, an AMF or SMF network element).
   In a 4G communication system, the policy control network element may be a policy and charging rules function (policy and charging rules function, PCRF) network element. In the 5G communication system, the policy control network element may be a policy control function (policy control function, PCF) network element. In a future communication system, a policy control network element may still be the PCF network element, or may have another name. This is not limited in this application.
8. A data management network element 108 is used for terminal device identifier processing, access authentication, registration, and mobility management, and the like.
   In the 5G communication system, the data management network element may be a unified data management (unified data management, UDM) network element. In the future communication system, the unified data management network element may still be the UDM network element, or may have another name. This is not limited in this application.
9. An application function (application function, AF) network element 109 is configured to implement information exchange between an external server and a 3GPP network.

It may be understood that the network elements or the functions may be network elements in a hardware device, may be software functions run on dedicated hardware, or may be virtualized functions instantiated on a platform (for example, a cloud platform).

In the network architecture, an N1 interface is a reference point between UE and the AMF network element, an N2 interface is a reference point between the RAN network element and the AMF network element, and is configured to send a non-access stratum (non-access stratum, NAS) message and the like; an N3 interface is a reference point between the RAN network element and the UPF network element, and is configured to transmit user plane data and the like; an N4 interface is a reference point between the SMF network element and the UPF network element, and is configured to transmit information such as tunnel identification information, data buffer indication information, and a downlink data notification message of an N3 connection; an N6 interface is a reference point between the UPF network element and the DN network element, and is configured to transmit user plane data and the like; and an N5 interface is a reference point between the PCF network element and the AF network element, and is used for communication between the PCF network element and the AF network element. For an N7 interface, an N8 interface, an N10 interface, and an N25 interface, refer to the descriptions of the N5 interface. Details are not described herein again.

It should be understood that the network elements included in the communication systems listed above are merely examples for description, and this application is not limited thereto. For example, the network elements may further include but are not limited to the following:

An authentication server network element is configured to provide an authentication service, generate a key, implement bidirectional authentication on a terminal device, and support a unified authentication framework.

In the 5G communication system, the authentication server may be an authentication server function (authentication server function, AUSF) network element. In the future communication system, the authentication server function network element may still be the AUSF network element, or may have another name. This is not limited in this application.

A charging network element is configured to perform rating, fee deduction, and quota and charging parameter delivery, process quota usage reported by the SMF, and so on.

In the 5G communication system, the charging function network element may be a charging function (charging function, CHF) network element. In the future communication system, the charging network element may still be the CHF network element, or may have another name. This is not limited in this application.

A slice selection function network element is configured to select a group of network slice instances for user equipment, determine allowed network slice selection assistance information (network slice selection assistance information, NSSAI), and determine a set of AMFs that can serve the user equipment.

In the 5G communication system, the slice selection function network element may be a slice selection function (network slice selection function, NSSF) network element. In the future communication system, the network slice selection function network element may still be the NSSF network element, or may have another name. This is not limited in this application.

It should be understood that the foregoing network architecture to which embodiments of this application are applied is merely an example of a network architecture described from a perspective of a service architecture, and a network architecture to which embodiments of this application are applicable is not limited thereto. Embodiments of this application are applicable to any network architecture that can implement functions of the foregoing network elements.

For example, in some network architectures, network function entities such as an AMF, an SMF, a PCF, and a UDM are all referred to as network function (Network Function, NF) network elements. Alternatively, in some other network architectures, a set of network elements such as an AMF, an SMF, a PCF, and a UDM may be referred to as control plane function (Control Plane Function, CPF) network elements.

In embodiments of this application, various embodiments are described with reference to a core network device. A function of a core network is mainly to provide a user connection, manage a user, and bear a service, and serve as a bearer network to provide an interface to an external network. Establishment of the user connection includes functions such as mobility management (mobility management, MM), call management (connection management, CM), switching/routing, and recording notification. The user management includes a user description, quality of service (quality of service, QoS), user communication accounting (accounting), a virtual home environment (virtual home environment, VHE), and security (corresponding security measures provided by an authentication center, including security management for a mobile service and security processing for external network access). Bearer access (access) includes a public switched telephone network (public switched telephone network, PSTN) to the outside, an external circuit data network, a packet data network, an internet (internet), an intranet (intranet), a short message service (short message service, SMS) server of a mobile network, and the like.

Basic services that can be provided by the core network include mobile office, e-commerce, communication, an entertainment service, a travel and location-based service, a telemetry (telemetry) service, a simple message transfer service (monitoring and control), or the like.

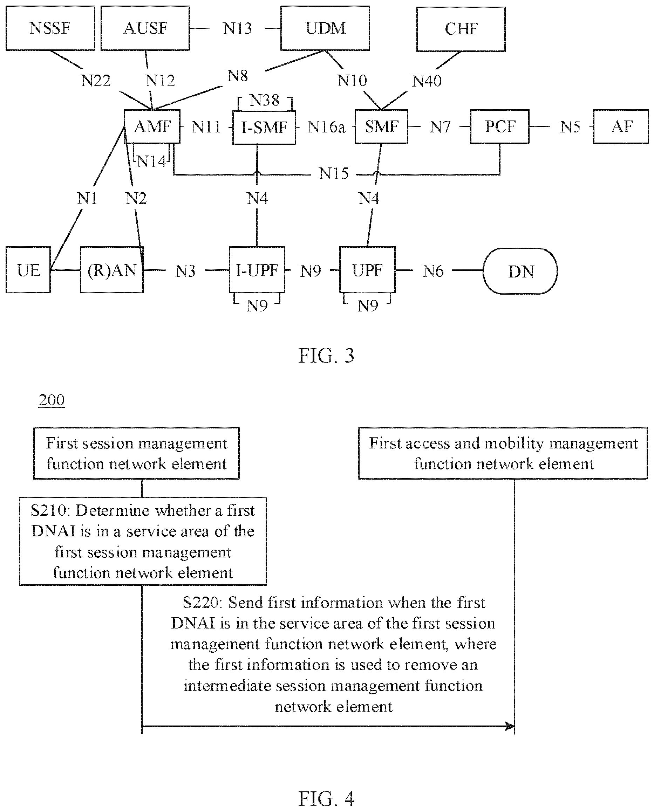

FIG. 3 is a schematic diagram of an ETSUN architecture according to this application. For network elements and interfaces in FIG. 3, refer to the descriptions in FIG. 2. Details are not described herein again.

A scenario shown in FIG. 3 is an enhancing topology of SMF and UPF in 5G networks (Enhancing Topology of SMF and UPF in 5G Networks, ETSUN) scenario proposed in the 3GPP R16 phase. An SMF cannot serve an entire public land mobile network (public land mobile network, PLMN), and an SMF service area (SMF service area, SMF SA) is a sum of service areas of all UPFs controlled by the SMF.

In the ETSUN scenario, when UE moves out of the SMF SA, an intermediate SMF (which may be referred to as an I-SMF) is inserted. When the UE moves out of an I-SMF SA and is beyond the SMF SA, an I-SMF change occurs.

During actual application, when a network side expects to access a MEC platform corresponding to a DNAI, for example, when the DNAI is beyond a service area of the SMF, with reference to a MEC technology and the ETSUN scenario, an AMF inserts an I-SMF into a control plane based on the DNAI, then the I-SMF inserts an intermediate UPF (I-UPF) into a user plane, and finally the I-SMF inserts an offloading point and a local anchor. In this way, a user plane path corresponding to the DNAI is established to access the corresponding MEC platform. The offloading point and the local anchor may be co-located, or may be separately deployed. The offloading point and the I-UPF may be a same network element, or may be different network elements.

For example, the UE establishes, through a session establishment procedure, a user plane path including the UE, a RAN, and a UPF to access a DN. When the network side expects the UE to access a DNAI-2, the network side inserts an 1-UPF based on the DNAI-2, and establishes a user plane path including the UE, the RAN, and the I-UPF to access a MEC platform corresponding to the DNAI-2. However, when the UE does not need to access the DNAI-2, for the UE to access the DN, compared with an original user plane path, a quantity of nodes on a newly established user plane path is increased, and a path latency is increased instead, resulting in deterioration of user experience.

As shown in a method 200 in FIG. 4, FIG. 4 is a schematic flowchart of interaction between a session management function network element and an access and mobility management function network element according to an embodiment of this application.

S210: A first session management function network element determines whether a first data network access identifier DNAI is in a service area of the first session management function network element.

S220: The first session management function network element sends first information, and the first access and mobility management function network element receives the first information, where the first information is used by the first access and mobility management function network element to remove an intermediate session management function network element, and the intermediate session management function network element is a session management function network element that is inserted by the first access and mobility management function network element and that serves a current session.

Specifically, the first session management function network element sends the first information when the first DNAI is in the service area of the first session management function network element.

For example, the first session management function network element may directly send the first information to the first access and mobility management function network element.

For example, when the intermediate session management function network element exists in the current session, the intermediate session management function network element may alternatively be used to send the first information to the first access and mobility management function network element.

It should be noted that the first information indicates to remove the intermediate session management function network element. The intermediate session management function network element is a session management function network element that is inserted by the access and mobility management function network element into the current session after the session management function network element establishes the current session and when the session management function network element cannot serve the target DNAI, so that the intermediate session management function network element can serve the target DNAI. Therefore, the intermediate session management function network element is a general term for the first session management function network element. That is, although the first information indicates to remove the intermediate session management function network element, the first information does not indicate a specific intermediate session management function network element. In other words, the first session management function network element knows whether the intermediate session management function network element is inserted into the current session, and may indicate the access and mobility management function network element to remove the intermediate session management function network element inserted into the current session, without knowing a specific intermediate session management function network element.

In the foregoing manner, when the first session management function network element determines that the first session management function network element can serve the first DNAI, regardless of whether the intermediate session management function network element is inserted into the current session, or if the intermediate session management function network element is inserted into the current session, regardless of whether the intermediate session management function network element can serve the first DNAI, the current session no longer needs the intermediate session management function network element. In this case, an intermediate user plane function network element managed by the intermediate session management function network element is a redundant node on a user plane path, and increases a hop count for accessing a data network by a user. In the foregoing manner, when the first session management function network element determines that the first session management function network element can serve the first DNAI, the first session management function network element indicates the first mobility session management function network element to remove the intermediate session management function network element. This can avoid a problem that the path latency for accessing the data network by the user is increased because there is the redundant node on the user plane path and the hop count of the path is increased, to improve user experience. In addition, a state before the intermediate session management function network element is inserted by a network side and an intermediate user plane path is inserted into the user plane path can be further restored.

It should be noted that step S220 may alternatively be implemented in the following manner:

In a possible implementation, the first session management function network element sends the first information when the first session management function network element determines that the first DNAI is in the service area of the first session management function network element, and the first access and mobility management function network element has selected an intermediate session management function network element.

It may be understood that, that the first access and mobility management function network element has selected an intermediate session management function network element may also be described as that the intermediate session management function network element exists in the current session.

In the foregoing manner, the intermediate session management function network element can be further indicated to be removed only when the intermediate session management function network element has been inserted into the current session and the first session management function network element can serve the first DNAI.

In a possible implementation, when the first session management function network element determines that the first DNAI is beyond the service area of the first session management function network element, the first access and mobility management function network element has selected an intermediate session management function network element, and the first DNAI is in a service area of the intermediate session management function network element, the first session management function network element sends the first DNAI to the intermediate session management function network element, to enable the intermediate session management function network element to determine an intermediate user plane function network element based on the first DNAI.

In a current solution, when the first session management function network element determines that the first DNAI is beyond the service area of the first session management function network element, the first access and mobility management function network element has selected the intermediate session management function network element, and the first DNAI is in the service area of the intermediate session management function network element, the first session management function network element sends target DNAI information (target DNAI info, including the first DNAI and an SMF selection type) to the first access and mobility management function network element, and then the first access and mobility management function network element sends the first DNAI to the intermediate session management function network element. However, in the foregoing manner of this application, the first session management function network element directly sends the first DNAI to the intermediate session management function network element, to enable the intermediate session management function network element to determine the intermediate user plane function network element based on the first DNAI, to shorten an information transmission path and improve user experience. In addition, the first access and mobility management function network element does not select a new intermediate session management function network element based on the first DNAI, and does not reuse an original intermediate session management function network element that can serve the first DNAI.

In a possible implementation, when the first session management function network element determines that the first DNAI is beyond the service area of the first session management function network element and is beyond the service area of the intermediate session management function network element, the first session management function network element sends the first information to the first access and mobility management function network element through the intermediate session management function network element. The first information indicates the first access and mobility management function network element to select the intermediate session management function network element.

In the foregoing manner, the first information is sent to the first access and mobility management function network element only when the first DNAI is beyond the service area of the first session management network element and the service area of the intermediate session management function network element, to indicate to select the intermediate session management function to serve the first DNAI. This avoids unnecessary signaling exchange between the first session management function network element and the first access and mobility management function network element.

In a possible implementation, when the first session management function network element determines that the first DNAI is in the service area of the first session management function network element, the first session management function network element determines a first user plane function network element based on the first DNAI; and the first session management function network element sends the first DNAI to the first user plane function network element.

Optionally, when the first session management function network element determines that the first DNAI is in the service area of the first session management function network element, and the first session management function network element determines that the first access and mobility management function network element has selected an intermediate session management function network element and that the first DNAI is beyond a service area of the intermediate session management function network element, the first session management function network element determines a first user plane function network element based on the first DNAI; and the first session management function network element sends the first DNAI to the first user plane function network element.

Optionally, when the first session management function network element determines that the first DNAI is in the service area of the first session management function network element, and the first session management function network element determines that the first access and mobility management function network element does not select an intermediate session management function network element, the first session management function network element determines a first user plane function network element based on the first DNAI; and the first session management function network element sends the first DNAI to the first user plane function network element.

It may be understood that, that the first access and mobility management function network element does not select an intermediate session management function network element may also be described as that no intermediate session management function network element exists in the current session.

In the foregoing manner, when determining that the first access and mobility management function network element does not select the intermediate session management function network element, the first session management function network element directly determines the first user plane function network element (a PSA) based on the first DNAI, and directly performs service offloading processing.

In a possible implementation, the first information includes the first DNAI and first indication information, and the first indication information indicates to remove the intermediate session management function network element.

For example, the first information may be target DNAI information (target DNAI info). The target DNAI information includes two parts: a target DNAI (target DNAI) and an SMF selection type (a current session or a next session). The first DNAI is used as the target DNAI. The first indication information is used as an option in the SMF selection type, and the first indication information may be represented by an enumerated value. For example, '0' indicates the current session, '1' indicates the next session, and '2' indicates intermediate session management function network element removal (I-SMF removal).

In a possible implementation, the first information is included in a first message, and the first message does not include the first DNAI.

For example, the first information may be included in target DNAI information (target DNAI info). The target DNAI information does not include a target DNAI, and includes only an SMF selection type.

In the foregoing manner, the intermediate session management function network element is implicitly indicated to be removed in a manner in which the first message does not include the first DNAI, so that bit overheads can be reduced.

For example, the first message includes target DNAI information (target DNAI info), and a DNAI (which may also be referred to as a target DNAI) in the target DNAI information (target DNAI info) has a preset value, to indicate to remove the intermediate session management function network element. For example, the preset value is any, whole PLMN, all-F field, or all-zero field. Specifically, the DNAI in the target DNAI information is set to the preset value to indicate to remove the intermediate session management function network element, and a structure of the target DNAI information is not changed, so that logic of the first session management function network element can be simplified. It should be understood that, in this case, the preset value may also be referred to as a special value, a specific value, a value for indicating to remove the intermediate session management function network element, or the like. This is not limited in this application.

According to the method 200, the intermediate user plane function network element is removed. This avoids a case in which the path latency for accessing the data network by the user is increased because there is the redundant node on the user plane path and the hop count of the path is increased, to improve user experience. In addition, the state before the intermediate session management function network element is inserted by the network side and the intermediate user plane function network element is inserted into the user plane path can be further restored. That is, the intermediate session management function network element is not required on the network side. When the intermediate user plane function network element is not required on the user plane path, the intermediate session management function network element and the intermediate user plane function network element can be removed, to reduce a hop count for information transmission.

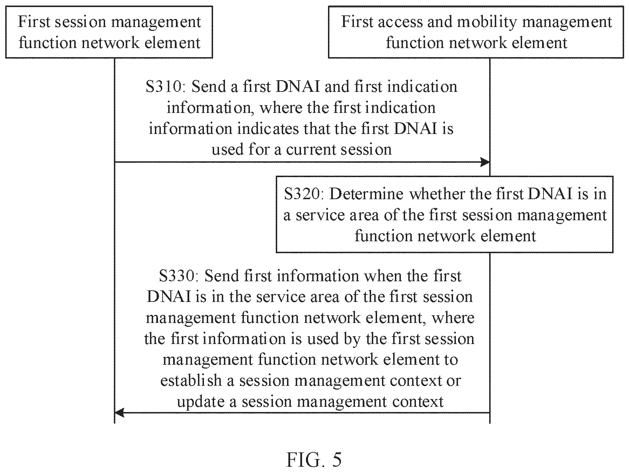

A solution is further designed in this application. As shown in a method 300 in FIG. 5, FIG. 5 is a schematic flowchart of interaction between a session management function network element and an access and mobility management function network element according to an embodiment of this application.

S310: A first session management function network element sends a first data network access identifier DNAI and first indication information, and a first access and mobility management function network element receives the first data network access identifier DNAI and the first indication information, where the first indication information indicates that the first DNAI is used for a current session.

S320: The first access and mobility management function network element determines, based on the first DNAI and a service area of the first session management function network element, whether the first DNAI is in the service area of the first session management function network element.

S330: The first access and mobility management function network element sends first information to the first session management function network element, where the first information is used by the first session management function network element to establish a session management context or update a session management context.

Specifically, the first access and mobility management function network element sends the first information to the first session management function network element when the first DNAI is in the service area of the first session management function network element.

For example, the first access and mobility management function network element receives the first DNAI and the first indication information from the first session management function network element through an intermediate session management function network element.

For example, the first DNAI and the first indication information are included in target DNAI information (target DNAI info).

In the foregoing manner, when the first access and mobility management function determines that the first DNAI is in the service area of the first session management function network element, regardless of whether the intermediate session management function network element is inserted into the current session, or if the intermediate session management function network element is inserted into the current session, regardless of whether the intermediate session management function network element can serve the first DNAI, the current session no longer needs the intermediate session management function network element. In this case, an intermediate user plane function network element managed by the intermediate session management function network element is a redundant node on a user plane path, and increases a hop count for accessing a data network by a user. In the foregoing manner, after determining that the first DNAI is in the service area of the first session management function network element, the first mobility session management function network element directly interacts with the first session management function network element, so that the first session management function network element establishes the session management context or updates the session management context, to remove the intermediate session management function network element. This can avoid a problem that the path latency for accessing the data network by the user is increased because there is the redundant node on the user plane path and the hop count of the path is increased, to improve user experience. In addition, a state before the intermediate session management function network element is inserted by a network side and an intermediate user plane path is inserted into the user plane path can be further restored.

In a possible implementation, when the first access and mobility management function network element has selected an intermediate session management function network element, the first access and mobility management function network element determines, based on the first DNAI and the service area of the first session management function network element, whether the first DNAI is in the service area of the first session management function network element, where the intermediate session management function network element is a session management function network element that is inserted by the first access and mobility management function network element and that serves the current session.

The first access and mobility management function network element sends the first information to the first session management function network element when the first DNAI is in the service area of the first session management function network element.

When the first DNAI is beyond the service area of the first session management function network element and is in a service area of the intermediate session management function network element, the first access and mobility management function network element sends the first DNAI to the intermediate session management function network element, to enable the intermediate session management function network element to select an intermediate user plane function network element based on the first DNAI.

When the first DNAI is beyond the service area of the first session management function network element and is beyond a service area of the intermediate session management function network element, the first access and mobility management function network element selects an intermediate session management function network element based on the first DNAI, to serve the first DNAI.

The intermediate session management function network element selects an intermediate user plane function network element based on the first DNAI.

It may be understood that, that the first access and mobility management function network element has selected an intermediate session management function network element may also be described as that the intermediate session management function network element exists in the current session.

In the foregoing manner, the intermediate session management function network element can be further removed only when the intermediate session management function network element has been inserted into the current session and the first session management function network element can serve the first DNAI.

Optionally, the first session management function network element sends the first DNAI and the first indication information to the first access and mobility management function network element when the first DNAI is in the service area of the first session management function network element, and no intermediate session management function network element exists.

In a possible implementation, the first access and mobility management function network element selects an intermediate session management function network element when the first DNAI is beyond the service area of the first session management function network element.

According to the method 300, the intermediate user plane function network element is removed. This avoids a case in which the path latency for accessing the data network by the user is increased because there is the redundant node on the user plane path and the hop count of the path is increased, to improve user experience. In addition, the state before the intermediate session management function network element is inserted by the network side and the intermediate user plane function network element is inserted into the user plane path can be further restored. That is, the intermediate session management function network element is not required on the network side. When the intermediate user plane function network element is not required on the user plane path, the intermediate session management function network element and the intermediate user plane function network element can be removed, to reduce a hop count for information transmission.

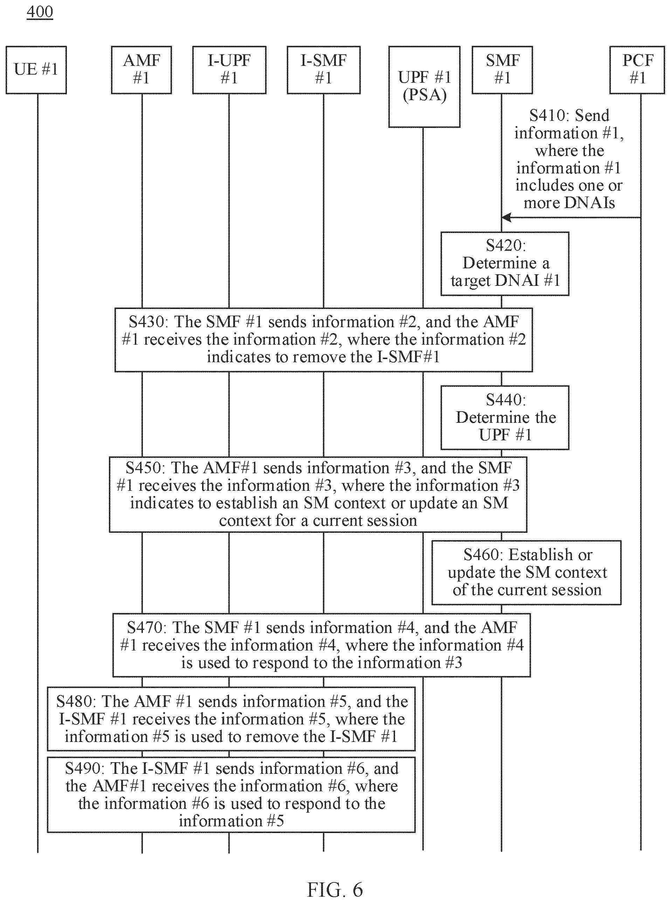

The following describes the method 200 and the method 300 in detail by using the following embodiments. As shown in a method 400 in FIG. 6, FIG. 6 is a schematic flowchart of an example according to an embodiment of this application.

S410: A PCF #1 sends information #1, and an SMF #1 receives the information #1.

The information #1 includes one or more DNAIs.

For example, the information #1 is included in a policy control and charging (policy control and charging, PCC) rule, and the PCC rule may be included in PCF_session management (session management, SM) policy control_update notify (Npcf_SM policy control update notify).

S420: The SMF #1 determines a target DNAI #1.

Specifically, the SMF #1 determines the target DNAI #1 from the one or more DNAIs in the information #1 based on at least one piece of information such as a location of UE #1, an accessed service, and a local configuration.

S430: The SMF #1 sends information #2, and an AMF #1 receives the information #2.

The information #2 indicates to remove an I-SMF. The AMF #1 determines, based on the information #2, to remove an I-SMF #1. The I-SMF #1 is an intermediate SMF inserted by a network side into a current session, the current session is established by the UE #1 through a session establishment procedure, and the SMF #1 and the I-SMF #1 provide a session management service for the current session.

Specifically, the SMF #1 determines, depending on whether the SMF #1 can serve the target DNAI #1 and/or whether the I-SMF #1 can serve the target DNAI #1, whether to send the information #2. This may be described with reference to Table 1.

**Table 1**

| | Service area of the SMF#1 | Service area of the I-SMF#1 | Action of the SMF #1 |
|---|---|---|---|
| Case 1 | Yes | Yes | Inappropriate scenario |
| Case 2 | Yes | No | The SMF #1 sends the information #2, and the AMF #1 removes the I-SMF #1 based on the information #2. |
| Case 3 | No | Yes | The SMF #1 sends the target DNAI #1 to the I-SMF #1. |
| Case 4 | No | No | The SMF #1 sends the target DNAI #1 and an SMF selection type to the AMF #1, so that the AMF #1 reselects an intermediate SMF (I-SMF). |
| Case 5 | Yes | No I-SMF #1 | The SMF #1 directly selects an offloading point and a local anchor based on the target DNAI #1. |

The following describes Table 1 in detail. When determining that the SMF #1 can serve the target DNAI #1, the SMF #1 sends the information #2.

Alternatively, as shown in Case 1, the DNAI #1 is in both the service area of the SMF #1 and the service area of the I-SMF #1. This scenario is not considered in this application.

As shown in Case 2, when the SMF #1 determines that the SMF #1 can serve the target DNAI #1, and the I-SMF #1 that has been inserted into the current session cannot serve the target DNAI #1, the SMF #1 sends the information #2 to the AMF #1 through the I-SMF #1.

Alternatively, as shown in Case 5, when the SMF #1 determines that the SMF #1 can serve the target DNAI #1, and the I-SMF #1 is not inserted into the current session, the SMF #1 may directly select the offloading point and the local anchor based on the target DNAI #1, to establish a user plane path for accessing a MEC platform corresponding to the DNAI #1. Optionally, the SMF #1 may still send the information #2 to the AMF #1. After the AMF #1 receives the information #2, the AMF #1 determines that there is no I-SMF, and the AMF #1 does not need to perform any processing.

Alternatively, as shown in Case 3, when the SMF #1 determines that the SMF #1 cannot serve the target DNAI #1, but the I-SMF #1 can serve the target DNAI #1, the SMF #1 sends the target DNAI #1 to the I-SMF #1 (where it should be noted that in a current solution, in this case, the SMF #1 sends the target DNAI #1 and the SMF selection type to the AMF #1, and then the AMF #1 sends the target DNAI #1 to the I-SMF #1; certainly, the AMF #1 may reselect an I-SMF, for example, an I-SMF #2, based on the DNAI #1, where the SMF selection type indicates the AMF #1 to insert the I-SMF into the current session). In this way, the I-SMF #1 selects an intermediate UPF (I-UPF #1) based on the target DNAI #1.

Alternatively, as shown in Case 4, when the SMF #1 determines that the SMF #1 cannot serve the target DNAI #1, and the I-SMF #1 cannot serve the target DNAI #1 either, the SMF #1 sends the target DNAI #1 and the SMF selection type to the AMF #1, to enable the AMF #1 to reselect an intermediate SMF (I-SMF). The SMF selection type indicates the AMF #1 to insert the I-SMF into the current session.

In a possible implementation, the information #2 is included in target DNAI information (target DNAI info), and the target DNAI information may be included in SMF_PDU session_SM context status notify (Nsmf_PDU session_SM context status notify). In this case, the target DNAI information indicates to remove the I-SMF #1 in the following three manners:

### Manner 1

Anew enumerated value, for example, "I-SMF removal (I-SMF removal)", is added to the SMF selection type (SMF selection type) in the target DNAI information (target DNAI info) to indicate to remove the I-SMF for the current session.

### Manner 2

The target DNAI information includes only an "SMF selection type (SMF selection type)" and does not include a "DNAI", and indicates to remove the I-SMF for the current session.

### Manner 3

A "DNAI" in the target DNAI information has a preset value, for example, any, whole PLMN, all-F field, or all-zero field, to indicate to remove the intermediate session management function network element. For example, the target DNAI info is (DNAI=0000, type).

It should be noted that, if the I-SMF #1 exists in the current session, the SMF #1 sends the information #2 to the I-SMF #1. In this case, the information #2 may be included in SMF_PDU session_status notify (Nsmf_PDU session_status notify). After receiving the information #2, the I-SMF #1 sends the information #2 to the AMF #1. In this case, the information #2 may be included in SMF_PDU session_SM context status notify (Nsmf_PDU session_SM context status notify).

It should be noted that the SMF #1 performs different subsequent actions based on determining in several cases. In methods (S440 to S490) described below, an example in which the SMF #1 can serve the target DNAI #1 and the I-SMF #1 exists in the current session is used to describe removal of the I-SMF #1, that is, Case 2 is used as an example for description. For subsequent actions in other cases, refer to Table 1 and the methods (S440 to S490). Details are not described again in this application.

S440: The SMF #1 determines a UPF #1 (PSA).

It may be understood that this step is an optional step.

It should be noted that this step may be performed after step S420 and before step S430. This step may alternatively be performed after step S460.

Specifically, when the SMF #1 determines that the SMF #1 can serve the target DNAI #1, the SMF #1 determines the UPF #1 based on the target DNAI #1.

In a possible implementation, the SMF #1 inserts an offloading point such as a ULCL or a BP based on the target DNAI #1, and uses the offloading point as the UPF #1, to offload a service flow to a MEC platform corresponding to the target DNAI #1.

S450: The AMF #1 sends information #3, and the SMF #1 receives the information #3.

It may be understood that the AMF #1 performs step S450 based on the information #2 received in step S430.

The information #3 indicates to establish an SM context or update an SM context for the current session.

For example, the information #3 includes at least one of the following information:
a session identifier: indicating the current session;
an SM context identifier (ID): used to point to the I-SMF #1;
UE location information (UE location info);
a target DNAI: indicating a location of the MEC platform; and
an indication of no NG-RAN change (indication of no NG-RAN change): indicating that NG-RAN tunnel information (tunnel info) remains unchanged.

For example, the information #3 is included in an SMF_PDU session_create SM context request (Nsmf_PDU session_create SM context request).

S460: The SMF #1 establishes or updates the SM context of the current session.

The SMF #1 establishes or updates the SM context of the current session based on the information #3.

For example, the SMF #1 requests to obtain the SM context of the current session from the I-SMF #1, the I-SMF #1 sends the SM context of the current session to the SMF #1, and the SMF #1 updates the SM context of the current session.

S470: The SMF #1 sends information #4, and the AMF #1 receives the information #4.

The information #4 indicates that the SMF #1 has obtained the SM context of the current session.

For example, the information #4 may be included in an SMF_PDU session_create SM context response (Nsmf_PDU session_create SM context response).

S480: The AMF #1 sends information #5, and the I-SMF #1 receives the information #5.

Specifically, the information #5 indicates to release (or remove) a session resource of the current session in the I-SMF #1, to remove the I-UPF #1. The I-UPF #1 is controlled by the I-SMF #1.

For example, the information #5 is included in an SMF_PDU session_release SM context request (Nsmf_PDU session_release SM context request).

S490: The I-SMF #1 sends information #6, and the AMF #1 receives the information #6.

Specifically, the information #6 is used to respond to the information #5.

For example, the information #6 is included in an SMF_PDU session_release SM context response (Nsmf_PDU session_release SM context response).

According to the method 400, the I-SMF is removed. This avoids a case in which a path latency for accessing a DN by a user is increased because there is a redundant node on a user plane path and a hop count of the path is increased, to improve user experience. In addition, a state before the I-SMF is inserted by the network side and an I-UPF is inserted into the user plane path can be restored. That is, the I-SMF is not required on the network side. When no I-UPF is required on the user plane path, the I-UPF can be removed to reduce the hop count of the user plane path.

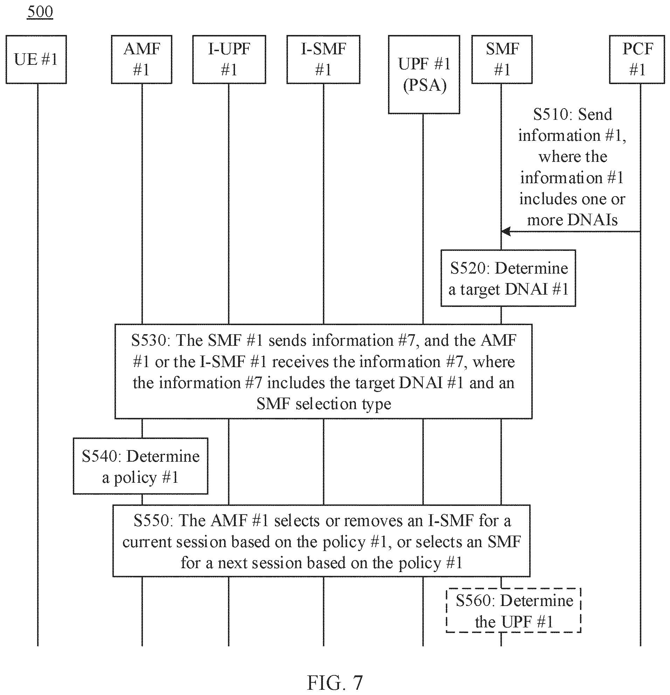

A method 500 is further designed in this application. The following uses an example for description with reference to FIG. 7. FIG. 7 is a schematic flowchart of another example according to an embodiment of this application.

S510: A PCF #1 sends information #1, and an SMF #1 receives the information #1.

The information #1 includes one or more DNAIs.

For example, the information #1 is included in a policy control and charging (policy control and charging, PCC) rule, and the PCC rule may be included in PCF_session management (session management, SM) policy control update notify (Npcf_SM policy control update notify).

S520: The SMF #1 determines a target DNAI #1.

Specifically, the SMF #1 determines the target DNAI #1 from the one or more DNAIs in the information #1 based on at least one piece of information such as a location of UE #1, an accessed service, and a local configuration.

S530: The SMF #1 sends information #7, and an AMF #1 receives the information #7.

The information #7 includes the target DNAI #1 and an SMF selection type (SMF selection type). The SMF selection type indicates to select an intermediate SMF for a current session.

Specifically, the SMF #1 determines, depending on whether the SMF #1 can serve the target DNAI #1 and/or whether an I-SMF #1 can serve the target DNAI #1, whether to send the information #7. This may be described with reference to Table 2.

**Table 2**

| | Service area of the SMF#1 | Service area of the I-SMF#1 | Action of the SMF #1 |
|---|---|---|---|
| Case 1 | Yes | Yes | Inappropriate scenario |
| Case 2 | Yes | No | The SMF #1 sends the information #7 to the AMF #1. |
| Case 3 | No | Yes | The SMF #1 sends the target DNAI #1 to the I-SMF #1. |
| Case 4 | No | No | Send first information to the AMF #1, so that the AMF #1 reselects an intermediate SMF. |
| Case 5 | Yes | No I-SMF #1 | The SMF #1 may send the information #7, or may not send the information #7. |

The following describes Table 2 in detail. When determining that the SMF #1 cannot serve the target DNAI #1, the SMF #1 sends the information #7.

Alternatively, as shown in Case 4, when the SMF #1 determines that the SMF #1 cannot serve the target DNAI #1, and the I-SMF #1 cannot serve the target DNAI #1, the SMF #1 sends the information #7, and the AMF #1 receives the information #7.

Alternatively, as shown in Case 3, when the SMF #1 determines that the SMF #1 cannot serve the target DNAI #1, and the I-SMF #1 can serve the target DNAI #1, the SMF #1 sends the target DNAI #1 to the I-SMF #1, and the SMF #1 sends the target DNAI #1 to the I-SMF #1 (where it should be noted that in a current solution, in this case, the SMF #1 sends the target DNAI #1 and the SMF selection type to the AMF #1, and then the AMF #1 sends the target DNAI #1 to the I-SMF #1; or the AMF #1 may select a new I-SMF, for example, an I-SMF #2). In this way, the I-SMF #1 selects an intermediate UPF (I-UPF #1) based on the target DNAI #1. Optionally, the target DNAI #1 may be included in SMF_PDU session_status notify (Nsmf_PDU session_status notify).

Alternatively, when the SMF #1 determines that the SMF #1 can serve the target DNAI #1, the SMF #1 sends the information #7, and the AMF #1 receives the information #7.

Alternatively, as shown in Case 1, when the SMF #1 determines that the SMF #1 can serve the target DNAI #1, and the I-SMF #1 inserted into the current session cannot serve the target DNAI #1, the SMF #1 sends the information #7, and the AMF #1 receives the information #7.

Alternatively, as shown in Case 2, when the SMF #1 determines that the SMF #1 can serve the DNAI #1, and the I-SMF #1 cannot serve the DNAI #1, the SMF #1 sends the information #7 to the AMF #1.

As shown in Case 5, when the SMF #1 determines that the SMF #1 can serve the target DNAI #1, and the I-SMF #1 is not inserted into the current session, the SMF #1 may directly select an offloading point and a local anchor based on the target DNAI #1. Optionally, the SMF #1 may send the information #7 to the AMF #1. After the AMF #1 receives the information #7, the AMF #1 determines that the SMF #1 can serve the DNAI #1, and the AMF #1 does not need to perform any processing, or the AMF #1 sends the DNAI #1 to the SMF #1. Optionally, the SMF #1 may not send the information #7.

In a possible implementation, when the SMF #1 sends the information #7 to the AMF #1, the information #7 is included in SMF_PDU session_SM context status notify (Nsmf_PDU session_SM context status notify).

It should be noted that, if the I-SMF #1 exists in the current session, the SMF #1 may first send the information #7 to the I-SMF #1. In this case, the information #7 may be included in SMF_PDU session_status notify (Nsmf_PDU session_status notify). After receiving the information #7, the I-SMF #1 sends the information #7 to the AMF #1. In this case, the information #7 may be included in SMF_PDU session_SM context status notify (Nsmf_PDU session_SM context status notify).

S540: The AMF #1 determines an action #1 based on the service area of the SMF #1, the service area of the I-SMF #1 (if the I-SMF #1 exists in the current session), and the DNAI #1.

The action #1 includes any one of the following actions:

When determining that the SMF #1 cannot serve the target DNAI #1, the AMF #1 selects an intermediate SMF for the current session.

Alternatively, when determining that neither the SMF #1 nor the I-SMF #1 can serve the target DNAI #1 (if the I-SMF #1 exists in the current session), the AMF #1 selects a new I-SMF for the current session.

Alternatively, when the AMF #1 determines that the SMF #1 cannot serve the target DNAI #1, and the I-SMF #1 can serve the target DNAI #1, the AMF #1 sends the DNAI #1 to the I-SMF #1.

Alternatively, when determining that the SMF #1 can serve the target DNAI #1, the AMF #1 removes the I-SMF for the current session.

Alternatively, when the AMF #1 determines that the SMF #1 can serve the target DNAI #1, and an intermediate SMF exists in the current session, the AMF #1 removes the I-SMF for the current session.

Alternatively, when the AMF #1 determines that the SMF #1 can serve the target DNAI #1, and no I-SMF #1 exists in the current session, the AMF #1 does not need to perform processing, or the AMF #1 sends the DNAI #1 to the SMF #1.

Specifically, the AMF #1 determines, based on the information #7 and the service area of the SMF #1, whether the SMF #1 can serve the target DNAI #1, to determine the action #1.

Optionally, when an I-SMF (namely, the I-SMF #1) exists in the current session, the AMF #1 further determines, based on the information #7 and the service area of the I-SMF #1, whether the I-SMF #1 can serve the target DNAI #1, to determine the action #1.

S550: The AMF #1 selects or removes an I-SMF for the current session based on the action #1, or selects an SMF for a next session based on the action #1.

For content of removing the I-SMF for the current session by the AMF #1 based on the action #1, refer to the method S450 to the method S490. Details are not described herein again.

For example, that the AMF #1 selects an I-SMF for the current session based on the action #1 includes the following steps:
Step a: The AMF #1 selects an I-SMF based on the target DNAI #1 (where when an old (old) I-SMF exists in the current session, the I-SMF selected by the AMF #1 based on the target DNAI #1 is a new (new) I-SMF). An example in which the I-SMF is an I-SMF #2 is used for description.
Step b: The AMF #1 sends information #3 to the I-SMF #2.
Step c: The I-SMF #2 obtains an SM context.

Specifically, if the I-SMF #2 is an SMF inserted into the current session, the I-SMF #2 obtains the SM context from the SMF #1. If an SMF (assumed to be the I-SMF #1) has been inserted into the current session, the I-SMF #2 obtains the SM context from the I-SMF #1.

Optionally, in S560, the SMF #1 determines a UPF #1 (PSA).

Specifically, when the SMF #1 can serve the target DNAI #1, the SMF #1 determines the UPF #1.

For specific content, refer to the method S340. Details are not described herein again.

According to the method 500, the I-SMF is removed. This avoids a problem that a path latency for accessing a DN by a user is increased because there is a redundant node on a user plane path and a hop count of the path is increased, to improve user experience. In addition, a state before an I-SMF is inserted by a network side and an 1-UPF is inserted into the user plane path can be restored. In other words, when the I-SMF is not required on the network side and the I-UPF is not required on the user plane path, the I-SMF and the I-UPF can be removed, to reduce a hop count for information transmission.

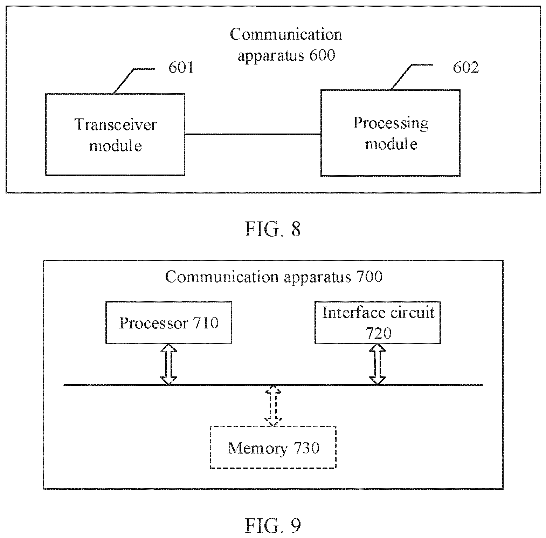

The foregoing describes in detail the technical solutions provided in the communication methods in embodiments of this application with reference to FIG. 1 to FIG. 7. The following describes communication apparatuses provided in embodiments of this application with reference to FIG. 8 and FIG. 9.

FIG. 8 and FIG. 9 are schematic structural diagrams of possible communication apparatuses according to embodiments of this application. These communication apparatuses can implement functions of the terminal device or the network device in the foregoing method embodiments, and therefore can also achieve advantageous effects of the foregoing method embodiments. In embodiments of this application, the communication apparatus may be the first communication apparatus in the method 200 or the method 300, or may be a module (for example, a chip) used in the first communication apparatus.

As shown in FIG. 8, the communication apparatus 600 includes a transceiver module 601 and a processing module 602. The communication apparatus 600 may be configured to implement a function of the communication apparatus in the method embodiment shown in FIG. 4 or a function of the communication apparatus in the method embodiment shown in FIG. 5.

When the communication apparatus 600 is configured to implement the function of the communication apparatus in the method embodiment in FIG. 4, the processing module 602 is configured to determine, by a first session management function network element, whether a first data network access identifier DNAI is in a service area of the first session management function network element; and the transceiver module 601 is configured to: send, by the first session management function network element, first information to a first access and mobility management function network element when the first DNAI is in the service area of the first session management function network element, where the first information is used by the first access and mobility management function network element to remove an intermediate session management function network element, and the intermediate session management function network element is a session management function network element that is inserted by the first access and mobility management function network element and that serves a current session.

When the communication apparatus 600 is configured to implement the function of the communication apparatus in the method embodiment in FIG. 5, the transceiver module 601 is configured to receive, by a first access and mobility management function network element, a first data network access identifier DNAI and first indication information from a first session management function network element, where the first indication information indicates that the first DNAI is used for a current session; and the processing module 602 is configured to determine, by the first access and mobility management function network element based on the first DNAI and a service area of a first session management function network element, whether the first DNAI is in the service area of the first session management function network element. The transceiver module is configured to send, by the first access and mobility management function network element, first information to the first session management function network element when the first DNAI is in the service area of the first session management function network element, where the first information is used by the first session management function network element to establish a session management context or update a session management context.

For more detailed descriptions of the transceiver module 601 and the processing module 602, refer to related descriptions in the foregoing method embodiments. Details are not described herein again.

As shown in FIG. 9, the communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions to be executed by the processor 710, input data required by the processor 710 to run the instructions, or data generated after the processor 710 runs the instructions.

For example, the memory 730 and the processor 710 may be integrated together, or may be independent components.

When the communication apparatus 700 is configured to implement the method in the foregoing method embodiments, the processor 710 is configured to perform a function of the processing module 602, and the interface circuit 720 is configured to perform a function of the transceiver module 601.

When the communication apparatus is a chip used in the first communication apparatus, the chip in the first communication apparatus implements a function of the first communication apparatus in the foregoing method embodiment. The chip in the first communication apparatus receives information from another module (for example, a radio frequency module or an antenna) in the first communication apparatus; or the first communication apparatus chip sends information to another module (for example, a radio frequency module or an antenna) in the first communication apparatus.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

It should be noted that embodiments in this specification are all described in a progressive manner, for same or similar parts in embodiments, reference may be made to these embodiments, and each embodiment focuses on a difference from other embodiments. Especially, the system or system embodiment is basically similar to the method embodiment, and therefore is described briefly. For a related part, refer to partial descriptions in the method embodiment. The described system and system embodiments are merely examples. The units described as separate parts may or may not be physically separate, and parts displayed as units may or may not be physical units, may be located at one position, or may be distributed on a plurality of network units. Some or all the modules may be selected according to an actual requirement to achieve the objectives of the solutions of embodiments. A person of ordinary skill in the art may understand and implement the embodiments without creative efforts.

It should be noted that in this specification, relational terms such as first, second, "#1", and "#2" are only used to distinguish one entity or operation from another entity or operation, and do not necessarily require or imply that any actual relationship or sequence exists between these entities or operations. Moreover, the terms "include" and "comprise" or any other variants thereof are intended to cover a non-exclusive inclusion, so that a process, a method, an article, or a device that includes a list of elements includes not only those elements but also other elements that are not expressly listed, or further includes elements inherent to such a process, such a method, such an article, or such a device. An element preceded by "includes a..." does not, without more constraints, preclude the presence of additional identical elements in the process, the method, the article, or the device that includes the element.

The method steps in embodiments of this application may be implemented by using hardware, or may be implemented by executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, to enable the processor to read information from the storage medium and write information into the storage medium. Certainly, the storage medium may alternatively be a component of the processor. The processor and the storage medium may be disposed in an ASIC. In addition, the ASIC may be located in an access network device or a terminal device. Certainly, the processor and the storage medium may alternatively exist in the access network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs and instructions. When the computer programs or the instructions are loaded and executed on a computer, all or some of the procedures or functions in embodiments of this application are executed. The computer may be a general-purpose computer, a dedicated computer, a computer network, or another programmable apparatus. The computer programs or the instructions may be stored in a computer-readable storage medium, or may be transmitted through a computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; or may be an optical medium, for example, a DVD; or may be a semiconductor medium, for example, a solid state disk (solid state disk, SSD).

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be in a singular form or a plural form. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not intended to limit the scope of embodiments of this application. The sequence numbers of the foregoing processes do not mean execution sequences, and the execution sequences of the processes should be determined based on functions and internal logic of the processes. It should be noted that not all steps in embodiments of this application need to be performed. Some steps may be omitted, and similar effects can still be achieved.

## Claims

1. A communication method, wherein the method comprises:
determining, by a first session management function network element, whether a first data network access identifier DNAI is in a service area of the first session management function network element; and
sending, by the first session management function network element, first information to a first access and mobility management function network element when the first DNAI is in the service area of the first session management function network element, wherein the first information indicates to remove an intermediate session management function network element, and the intermediate session management function network element is a session management function network element that is inserted by the first access and mobility management function network element and that serves a current session.

2. The method according to claim 1, wherein the method further comprises:
sending, by the first session management function network element, the first information when the first session management function network element determines that the first DNAI is in the service area of the first session management function network element, and the intermediate session management function network element exists in the current session.

3. The method according to claim 1 or 2, wherein after the sending the first information, the method further comprises:
receiving, by the first session management function network element, second information from the first session management function network element, wherein the second information indicates to establish a session management context or update a session management context.

4. The method according to any one of claims 1 to 3, wherein the first information is target DNAI information that does not comprise a target DNAI.

5. The method according to claim 1, 3, or 4, wherein the method further comprises:
when the first session management function network element determines that the first DNAI is beyond the service area of the first session management function network element, the first access and mobility management function network element has selected an intermediate session management function network element, and the first DNAI is in a service area of the intermediate session management function network element, sending, by the first session management function network element, the first DNAI to the intermediate session management function network element, to enable the intermediate session management function network element to determine an intermediate user plane function network element based on the first DNAI.

6. The method according to claim 1, 3, or 4, wherein the method further comprises:
when the first session management function network element determines that the first access and mobility management function network element does not select an intermediate session management function network element, determining, by the first session management function network element, a first user plane function network element based on the first DNAI; and
sending, by the first session management function network element, the first DNAI to the first user plane function network element.

7. The method according to any one of claims 1 to 6, wherein the first information comprises the first DNAI and first indication information, and the first indication information indicates to remove the intermediate session management function network element.

8. The method according to any one of claims 1 to 6, wherein the first information is comprised in a first message, and the first message does not comprise the first DNAI.

9. The method according to claim 8, wherein the first message comprises target DNAI information, and the first information is specifically:
a target DNAI in the target DNAI information has a preset value, to indicate to remove the intermediate session management function network element.

10. The method according to claim 8, wherein the first message comprises target DNAI information, and the first information is specifically:
the target DNAI information does not comprise a target DNAI.

11. A communication method, wherein the method comprises:
receiving, by a first access and mobility management function network element, first information from a first session management function network element, wherein the first information indicates to remove an intermediate session management function network element, and the intermediate session management function network element is a session management function network element that is inserted by the first access and mobility management function network element and that serves a current session; and
sending, by the first access and mobility management function network element, second information to the first session management function network element based on the first information, wherein the second information indicates to establish a session management context or update a session management context.

12. The method according to claim 11, wherein the method further comprises:
sending, by the first access and mobility management function network element, third information to the intermediate session management function network element when the intermediate session management function network element exists in the current session, wherein the third information indicates to release a session resource in the intermediate session management function network element.

13. The method according to claim 11 or 12, wherein the first information is target DNAI information that does not comprise a target DNAI.

14. The method according to claim 11 or 12, wherein the first information comprises a first data network access identifier DNAI and first indication information, and the first indication information indicates to remove the intermediate session management function network element.

15. The method according to claim 11 or 12, wherein the first information is comprised in a first message, and the first message does not comprise a first data network access identifier DNAI.

16. The method according to claim 15, wherein the first message comprises target DNAI information, and the first information is specifically:
a target DNAI in the target DNAI information has a preset value, to indicate to remove the intermediate session management function network element.

17. The method according to claim 15, wherein the first message comprises target DNAI information, and the first information is specifically:
the target DNAI information does not comprise a target DNAI.

18. A communication apparatus, wherein the apparatus is used in a first session management function network element and comprises:
a processing module, configured to determine, by the first session management function network element, whether a first data network access identifier DNAI is in a service area of the first session management function network element; and
a transceiver module, configured to send, by the first session management function network element, first information to a first access and mobility management function network element when the first DNAI is in the service area of the first session management function network element, wherein the first information indicates to remove an intermediate session management function network element, and the intermediate session management function network element is a session management function network element that is inserted by the first access and mobility management function network element and that serves a current session.

19. The apparatus according to claim 18, wherein the apparatus further comprises:
the transceiver module is configured to send, by the first session management function network element, the first information when the first session management function network element determines that the first DNAI is in the service area of the first session management function network element, and the intermediate session management function network element exists in the current session.

20. The apparatus according to claim 18 or 19, wherein the transceiver module is further configured to:
after sending the first information, receive second information from the first session management function network element, wherein the second information indicates to establish a session management context or update a session management context.

21. The apparatus according to any one of claims 18 to 20, wherein the first information is target DNAI information that does not comprise a target DNAI.

22. The apparatus according to claim 18, 20, or 21, wherein the apparatus further comprises:
When the first session management function network element determines that the first DNAI is beyond the service area of the first session management function network element, the first access and mobility management function network element has selected an intermediate session management function network element, and the first DNAI is in a service area of the intermediate session management function network element, the transceiver module is configured to send, by the first session management function network element, the first DNAI to the intermediate session management function network element, to enable the intermediate session management function network element to determine an intermediate user plane function network element based on the first DNAI.

23. The apparatus according to claim 18, 20, or 21, wherein the apparatus further comprises:
when the first session management function network element determines that the first access and mobility management function network element does not select an intermediate session management function network element, the processing module is configured to determine, by the first session management function network element, a first user plane function network element based on the first DNAI; and
the transceiver module is configured to send, by the first session management function network element, the first DNAI to the first user plane function network element.

24. The apparatus according to any one of claims 18 to 23, wherein the first information comprises the first DNAI and first indication information, and the first indication information indicates to remove the intermediate session management function network element.

25. The apparatus according to any one of claims 18 to 23, wherein the first information is comprised in a first message, and the first message does not comprise the first DNAI.

26. The apparatus according to claim 25, wherein the first message comprises target DNAI information, and the first information is specifically:
a target DNAI in the target DNAI information has a preset value, to indicate to remove the intermediate session management function network element.

27. The apparatus according to claim 25, wherein the first message comprises target DNAI information, and the first information is specifically:
the target DNAI information does not comprise a target DNAI.

28. A communication apparatus, wherein the apparatus is used in a first access and mobility management function network element and comprises:
a transceiver module, configured to receive, by the first access and mobility management function network element, first information from a first session management function network element, wherein the first information indicates to remove an intermediate session management function network element, and the intermediate session management function network element is a session management function network element that is inserted by the first access and mobility management function network element and that serves a current session; and
a processing module, configured to send, by the first access and mobility management function network element, second information to the first session management function network element based on the first information, wherein the second information indicates to establish a session management context or update a session management context.

29. The apparatus according to claim 28, wherein the apparatus further comprises:
the transceiver module is configured to send, by the first access and mobility management function network element, third information to the intermediate session management function network element when the intermediate session management function network element exists in the current session, wherein the third information indicates to release a session resource in the intermediate session management function network element.

30. The apparatus according to claim 28 or 29, wherein the first information is target DNAI information that does not comprise a target DNAI.

31. The apparatus according to claim 28 or 29, wherein the first information comprises a first data network access identifier DNAI and first indication information, and the first indication information indicates to remove the intermediate session management function network element.

32. The apparatus according to claim 28 or 29, wherein the first information is comprised in a first message, and the first message does not comprise a first data network access identifier DNAI.

33. The apparatus according to claim 32, wherein the first message comprises target DNAI information, and the first information is specifically:
a target DNAI in the target DNAI information has a preset value, to indicate to remove the intermediate session management function network element.

34. The apparatus according to claim 32, wherein the first message comprises target DNAI information, and the first information is specifically:
the target DNAI information does not comprise a target DNAI.

35. A communication method, wherein the method comprises:
receiving, by a first access and mobility management function network element, a first data network access identifier DNAI and first indication information from a first session management function network element, wherein the first indication information indicates that the first DNAI is used for a current session;
determining, by the first access and mobility management function network element based on the first DNAI and a service area of the first session management function network element, whether the first DNAI is in the service area of the first session management function network element; and
sending, by the first access and mobility management function network element, first information to the first session management function network element when the first DNAI is in the service area of the first session management function network element, wherein the first information is used by the first session management function network element to establish a session management context or update a session management context.

36. The method according to claim 35, wherein the method further comprises:
when an intermediate session management function network element exists in the current session, determining, by the first access and mobility management function network element based on the first DNAI and the service area of the first session management function network element, whether the first DNAI is in the service area of the first session management function network element, wherein the intermediate session management function network element is a session management function network element that is inserted by the first access and mobility management function network element and that serves the current session.

37. The method according to claim 35 or 36, wherein the method further comprises:
selecting, by the first access and mobility management function network element, an intermediate session management function network element when the first DNAI is beyond the service area of the first session management function network element.

38. The method according to claim 35 or 36, wherein when the first DNAI is in the service area of the first session management function network element, the method further comprises:
sending, by the first access and mobility management function network element to the intermediate session management function network element, information indicating to release a session resource of the current session in the intermediate session management function network element, wherein the intermediate session management function network element is a session management function network element that exists in the current session.

39. A communication method, wherein the method comprises:
determining, by a first session management function network element, whether a first data network access identifier DNAI is in a service area of the first session management function network element; and
sending, by the first session management function network element, the first DNAI and first indication information to a first access and mobility management function network element when the first DNAI is in the service area of the first session management function network element, wherein the first indication information indicates that the first DNAI is used for a current session.

40. The method according to claim 39, wherein the method further comprises:
sending, by the first session management function network element, the first DNAI and the first indication information when the first session management function network element determines that the first DNAI is in the service area of the first session management function network element, and an intermediate session management function network element exists in the current session, wherein the intermediate session management function network element is a session management function network element that is inserted by the first access and mobility management function network element and that serves the current session.

41. The method according to claim 39 or 40, wherein the method further comprises:
when the first DNAI is beyond the service area of the first session management function network element, and the first DNAI is in a service area of the intermediate session management function network element, sending, by the first session management function network element, the first DNAI to the intermediate session management function network element, to enable the intermediate session management function network element to select a first user plane function network element based on the first DNAI.

42. A communication apparatus for data transmission, comprising a processor and a communication interface, wherein the communication interface is configured to receive a signal from a communication apparatus other than the communication apparatus and transmit the signal to the processor, or transmit a signal from the processor to a communication apparatus other than the communication apparatus, and the processor is configured to implement the method according to any one of claims 1 to 10, 11 to 17, 35 to 38, or 39 to 41.

43. A computer-readable storage medium, wherein the computer-readable storage medium stores a computer program, and when the computer program is run, the method according to any one of claims 1 to 10, 11 to 17, 35 to 38, or 39 to 41 is implemented.

44. A computer program product, wherein the computer program product comprises computer program code, and when the computer program code is run by a communication apparatus, the communication apparatus is enabled to perform the method according to any one of claims 1 to 10, 11 to 17, 35 to 38, or 39 to 41.

45. A communication apparatus, comprising one or more functional modules, configured to perform the method according to any one of claims 35 to 38 or 39 to 41.

46. A communication system, comprising an access and mobility management function network element and a session management function network element, wherein
the access and mobility management function network element is configured to perform the method according to any one of claims 1 to 10, and the session management function network element is configured to perform the method according to any one of claims 11 to 17.

47. The system according to claim 46, wherein the system further comprises an intermediate session management function network element, configured to receive third information from the access and mobility management function network element, wherein the third information indicates to release a session resource in the intermediate session management function network element.

48. A communication system, comprising an access and mobility management function network element and a session management function network element, wherein
the access and mobility management function network element is configured to perform the method according to any one of claims 35 to 38, and the session management function network element is configured to perform the method according to any one of claims 39 to 41.

49. The system according to claim 48, wherein the system further comprises an intermediate session management function network element, configured to receive third information from the access and mobility management function network element, wherein the third information indicates to release a session resource in the intermediate session management function network element.
